# EUROPEAN PATENT SPECIFICATION

(11) **EP 4 284 007 B1**
(45) Date of publication and mention of the grant of the patent: **01.07.2026**
(21) Application number: 23203806.7
(22) Date of filing: 29.10.2015
(51) Int. Cl.: H04H 20/93, H04H 60/73, H04N 21/2362, H04N 21/63

(54) **TRANSMISSION DEVICE, TRANSMISSION METHOD, RECEPTION DEVICE, AND RECEPTION METHOD**
SENDEVORRICHTUNG, SENDEVERFAHREN, EMPFANGSVORRICHTUNG UND EMPFANGSVERFAHREN
DISPOSITIF D'ÉMISSION, PROCÉDÉ D'ÉMISSION, DISPOSITIF DE RÉCEPTION ET PROCÉDÉ DE RÉCEPTION

(30) Priority: 07.11.2014 JP 2014227551
(43) Date of publication of application: 29.11.2023
(62) Divisional of application: 15856936.8
(73) Proprietor: Sony Group Corporation, Tokyo 108-0075 (JP)
(72) Inventor: Kitazato, Naohisa, Tokyo, 108-0075 (JP); Yamagishi, Yasuaki, Tokyo, 108-0075 (JP); Kitahara, Jun, Tokyo, 108-0075 (JP)
(74) Representative: Witte, Weller & Partner Patentanwälte mbB

(56) References cited:
- EP-A1- 2 739 048
- EP-A1- 2 784 953
- WO-A1-2014/084073
- US-A- 6 029 200
- US-A1- 2015 296 005

## Description

### TECHNICAL FIELD

The present technology relates to a transmission apparatus, a transmission method, a receiving apparatus, and a receiving method, and specifically relates to, for example, a transmission apparatus suitable to be applied to a hybrid broadcasting and communication system.

### BACKGROUND ART

In the current broadcasting system, the moving picture experts group-2 transport stream (MPEG-2 TS) format and the real time protocol (RTP) format are widely used as media transport formats (for example, see Patent Document 1). The MPEG media transport (MMT) format (see, for example, Non-Patent Document 1) is under discussion as a next-generation digital broadcasting format.

Patent document 2 discloses how to compound broadcast content and network content and suitably reproduce the two pieces of content concurrently using a data broadcast service. A broadcaster and an application provider, for example, upload AV content related to broadcast content to a server, and deliver a data broadcast application containing a URL link to AV content. Each of selection buttons of a mosaic-type menu contains a URL link to AV content. The broadcaster and the application provider can control what should be a streaming moving picture that a user reproduces concurrently with viewing a program.

Patent Document 3 discloses a streaming multimedia rendering system having a network client and a network server that form part of a hyperlink web such as the Internet. A hyperlink to multimedia content is actually an indirect link to a reference file. The reference file contains a plurality of different resource specifiers and a preferred order for attempting communications using the resource specifiers. Each resource specifier designates a transport protocol. A streaming data client opens the resource file in response to activation of a hyperlink to the resource file. In response to the resource specifiers contained in the resource file, the network data client repeteadly attempts to establish a streaming data connection using the different resource specifiers, in the preferred order specified in the reference file, or in the preferred order specified by a file referenced by the reference file, until a streaming data connection is succesfully established. Each attempt with a different resource specifier uses the transport protocol designated by that different resource specifier. Different types of protocol specifiers are available. Some of the protocol specifiers override configuration settings made at the network data client relating to which transport protocols are permitted.

### CITATION LIST

### PATENT DOCUMENT

Patent Document 1: Japanese Patent Application Laid-Open No. 2013-153291
Patent Document 2: EP 2 739 048 A1
Patent Document 3: US 6029200 A

### NON-PATENT DOCUMENT

Non-Patent Document 1: ISO/IEC DIS 23008-1:2013(E) Information technology-High efficiency coding and media delivery in heterogeneous environments-Part1:MPEG media transport(MMT)

### SUMMARY OF THE INVENTION

### PROBLEMS TO BE SOLVED BY THE INVENTION

An object of the present technology is to make hybrid broadcasting and communication services excellently implementable.

### SOLUTIONS TO PROBLEMS

According to the present invention a transmission apparatus, a receiving apparatus and corresponding methods are provided in the independent claims.

In the present technology, the transport stream obtained by time-division multiplexing a plurality of transmission packets each respectively including a predetermined component or information on the predetermined component is generated. For example, the transmission packet may be configured to be an MPEG media transport (MMT) packet. The transmission unit transmits the transport stream to a receiving side along a broadcast transmission path.

The information insertion unit inserts, into a table in a transmission packet including information on the component, the information on the plurality of distribution protocols, the information on each distribution protocol including at least location information and protocol identification information, for acquiring a specific component to be acquired on the communication path, in relation to the specific component. For example, the plurality of distribution protocols may be configured to be two or more distribution protocols to be selected from protocols of multicast distribution, MMTP/UDP distribution, MMTP/TCP distribution, MMTP/HTTP distribution, and MPU/HTTP distribution.

In this case, when the protocol identification information indicates, for example, the MMTP/UDP distribution, the information on the distribution protocol may be configured to include a parameter that specifies UDP in addition to a URL. Moreover, in this case, when the protocol identification information indicates, for example, the MMTP/TCP distribution, the information on the distribution protocol may be configured to include a parameter that specifies TCP in addition to a URL.

It may be configured such that, for example, information on a plurality of the specific components is placed in the transmission packet including information on the component and information on one of the plurality of distribution protocols is inserted into the placed information on each of the plurality of specific components. Moreover, it may be configured such that, for example, information on one specific component is placed in the transmission packet including information on the component, and the information on the plurality of distribution protocols is inserted into the placed information on the one specific component.

In this manner, the information on the plurality of distribution protocols, the information on each distribution protocol including at least location information and protocol identification information, for acquiring a specific component on the communication path, is inserted into a table in the transmission packet including information on the component. Hence, a receiving side can excellently receive the specific component through a distribution protocol in accordance with its own distribution network environment.

In the present technology, it may be, incidentally, configured such that, for example, the information on the distribution protocol further includes packet identification information. In this case, the receiving side is ensured to acquire a transmission packet of a specific component on the basis of the packet identification information even if a plurality of transmission packets of components is multiplexed into the transport stream.

Moreover, in the present technology, it may be configured such that, for example, information on another component to be multiplexed with the specific component and distributed is added to the information on each of the plurality of distribution protocols. In this case, the receiving side can easily recognize which component is multiplexed with a specific component into the transport stream to be distributed, or whether or not the transport stream to be distributed includes only the specific component.

Moreover, in the present technology, it may be configured such that, for example, managed network information is added to information on the protocol of multicast distribution among the information on the plurality of distribution protocols. In this case, the receiving side can easily judge whether or not to be connectable to the managed network for receiving multicast distribution.

In the present technology, the receiving unit receives, along the broadcast transmission path, the transport stream obtained by time-division multiplexing the plurality of transmission packets each respectively including the predetermined component and the information on the predetermined component. For example, the transmission packet may be configured to be an MMT packet.

The information on the plurality of distribution protocols for acquiring the specific component to be acquired on the communication path is inserted into a table of the transmission packet including information on the component in relation to the specific component. The information on each of the plurality of distribution protocols includes at least location information and protocol identification information.

The communication unit selects one receivable distribution protocol from the information on the plurality of distribution protocols. The communication unit then receives a transport stream including a further transmission packet having the specific component via the network through the selected distribution protocol.

In this manner, in the present technology, distribution is received by selecting one receivable distribution protocol, in relation to the specific component provided in a table of the transmission packet including the information on the component, from the information on the plurality of distribution protocols. Hence, the specific component can be excellently received through a distribution protocol in accordance with its own distribution network environment.

In the present technology, it may be, incidentally, configured such that, for example, the information on the distribution protocol further includes packet identification information, and the communication unit extracts the further transmission packet of the received transport stream including the further transmission packet, on the basis of the packet identification information. In this case, it is ensured to acquire the further transmission packet on the basis of the packet identification information even if a plurality of transmission packets of components is multiplexed into the transport stream.

### EFFECTS OF THE INVENTION

According to the present technology, hybrid broadcasting and communication services can be excellently implemented. Incidentally, the effects described in the description are merely illustrated by example, and are not intended to be restricted. Moreover, there may be additional effects.

### BRIEF DESCRIPTION OF DRAWINGS

Fig. 1 is a block diagram illustrating a configuration example of a hybrid broadcasting and communication system as an embodiment.
Fig. 2 is a diagram illustrating a stack model of a signal configuration example of MMT/broadcasting.
Figs. 3(a) to 3(e) are diagrams illustrating configuration examples of a broadcast stream in MMT format.
Fig. 4 is a diagram illustrating an image of a broadcast signal of one channel (broadcast program) to be transmitted from a broadcast transmission system to a receiving terminal.
Figs. 5(a) and 5(b) are diagrams illustrating a configuration example of an MMT packet and a configuration example of an MMTP payload (MMTP payload).
Fig. 6 is a diagram illustrating a stack model of a signal configuration example of MMT/communication.
Fig. 7 is a diagram illustrating an example of an MMT distribution network environment.
Fig. 8 is a diagram schematically illustrating configuration examples of a package access message (PA message) and an MMT package table (MP table: MPT).
Fig. 9 is a diagram illustrating descriptions of main parameters of the PA message.
Fig. 10 is a diagram illustrating descriptions of main parameters of the MP table.
Fig. 11 is a diagram illustrating a structural example (syntax) of the PA message.
Fig. 12 is a diagram illustrating a structural example (syntax) of the MP table (MPT).
Fig. 13 is a diagram illustrating part of a structural example (syntax) of "MMT_general_location_info()."
Figs. 14(a) and 14(b) are diagrams illustrating description examples of an MP table (MPT) in which information on a plurality of distribution protocols is inserted in relation to specific components (assets) on a communication path.
Fig. 15 is a diagram illustrating a structural example of a communication distribution descriptor.
Fig. 16 is a diagram illustrating contents of main information in the structural example of the communication description descriptor.
Figs. 17(a) and 17(b) are diagrams illustrating description examples of an MP table (MPT) in which information on a plurality of distribution protocols is inserted in relation to specific components (assets) on a communication path.
Fig. 18 is a diagram illustrating a structural example of the communication distribution descriptor.
Figs. 19(a) to 19(c) are diagrams illustrating description examples of an MP table (MPT) in which acquisition information for acquiring information on a plurality of distribution protocols is inserted in relation to specific components (assets) on a communication path.
Fig. 20 is a diagram illustrating a structural example of a BD table where information on a plurality of distribution protocols is described, and the content of the information on each of the plurality of distribution protocols.
Fig. 21 is a flowchart illustrating an example of a view selection/receiving process in a receiving terminal.
Fig. 22 is a diagram for describing a receive sequence in a case of receiving an asset distributed through a protocol of (A) multicast distribution.
Fig. 23 is a diagram for describing a receive sequence in a case of receiving an asset distributed through a protocol of (B) MMTP/UDP distribution.
Fig. 24 is a diagram for describing a receive sequence in a case of receiving an asset distributed through a protocol of (C) MMTP/TCP distribution.
Fig. 25 is a diagram for describing a receive sequence in a case of receiving an asset distributed through a protocol of (D) MMTP/HTTP distribution.
Fig. 26 is a diagram for describing a cutting process in a multiplexed stream of MMTP/HTTP.
Fig. 27 is a diagram for describing a receive sequence in a case of receiving an asset distributed through a protocol of (E) MPU/HTTP distribution.
Fig. 28 is a block diagram illustrating a configuration example of a broadcast transmission system.
Fig. 29 is a block diagram illustrating a configuration example of the receiving terminal.

### MODE FOR CARRYING OUT THE INVENTION

A mode for carrying out the invention (hereinafter referred to as the "embodiment") is described hereinafter. Incidentally, descriptions are given in the following order:
1. Embodiment
2. Modifications

### <1. Embodiment)

[Configuration Example of a Hybrid Broadcasting and Communication System]

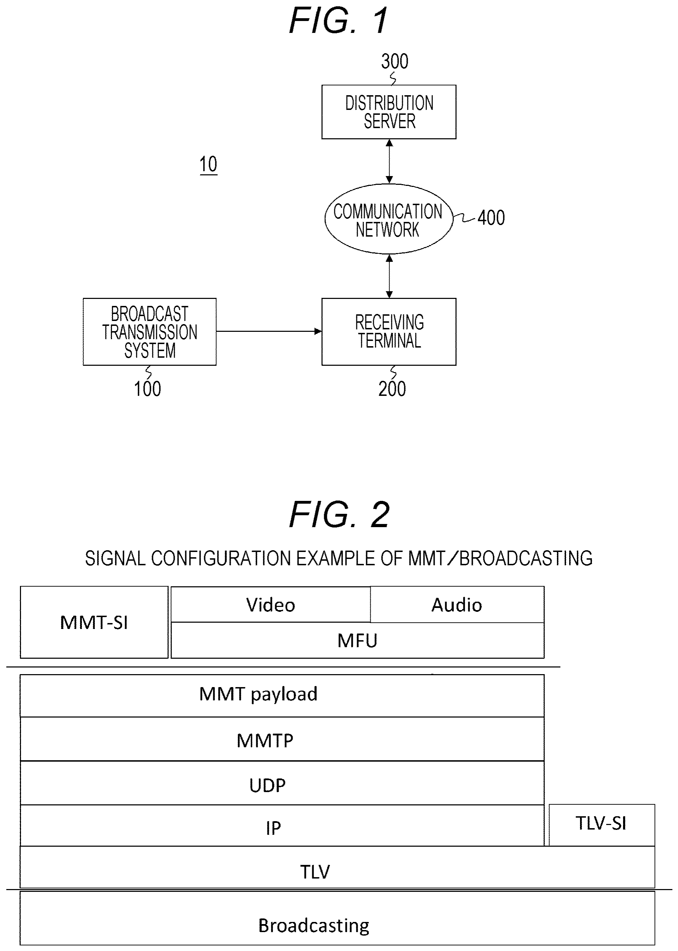

Fig. 1 illustrates a configuration example of a hybrid broadcasting and communication system 10. In the hybrid broadcasting and communication system 10, a broadcast transmission system 100 and a distribution server 300 are placed on a transmission side, and a receiving terminal 200 is placed on a receiving side. The distribution server 300 is connected to the receiving terminal 200 via a communication network 400.

The broadcast transmission system 100 transmits a broadcast signal in Internet protocol (IP) format including, for example, a video or audio component (asset) as transmission media. The distribution server 300 distributes a transport stream where IP packets including, for example, video and audio components (assets) as transmission media are continuously placed to the receiving side via the communication network 400, for example, at the request of the receiving side.

The receiving terminal 200 receives a broadcast signal in IP format transmitted from the broadcast transmission system 100, and also receives, from the distribution server 300, a transport stream where IP packets are continuously placed. The receiving terminal 200 acquires transmission media (component) such as video or audio that should be presented, from the received signal in such hybrid broadcasting and communication transmission, and presents an image, sound, or the like.

Information on a plurality of distribution protocols for acquiring a specific component to be acquired on a communication path is inserted into a broadcast signal in IP format, in relation to the specific component. The information on each of the plurality of distribution protocols includes at least location information and protocol identification information. The receiving terminal 200 selects one receivable distribution protocol from the information on the plurality of distribution protocols, and receives the distribution of the specific component through the distribution protocol.

Fig. 2 illustrates a stack model of a signal configuration example of MMT/broadcasting. A type length value (TLV) transmission packet is present in a lower layer. An IP packet is on the TLV transmission packet. Incidentally, there is also a TLV transmission packet on which a transmission control signal is placed as signaling (signaling) information.

The user datagram protocol (UDP) is on the IP packet. An MPEG media transport (MMT) packet is then on UDP. A payload portion of the MMT packet includes an MMT fragment unit (MFU) including encoded data of, for example, video or audio component, or a signaling message (signaling message) including information on the transmission media.

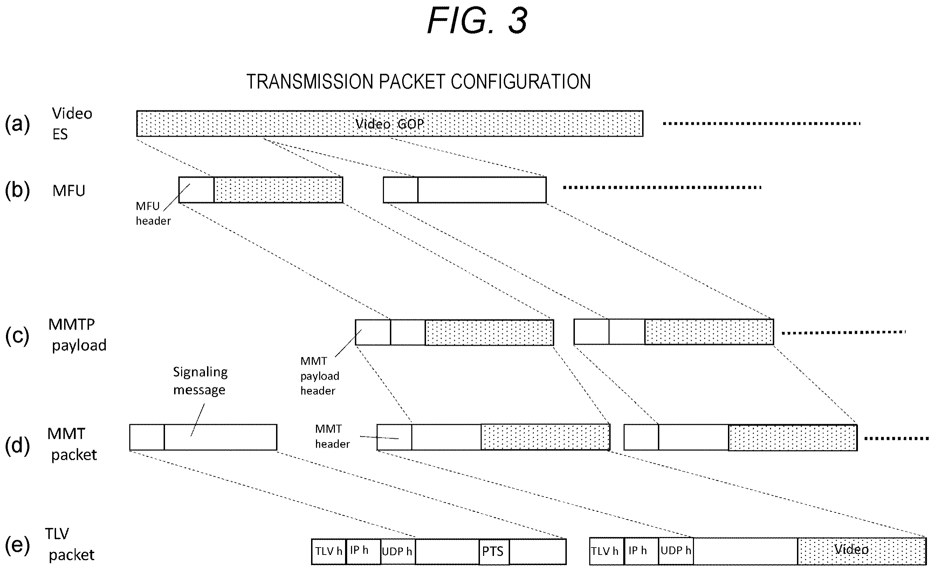

Figs. 3(a) to 3(e) illustrate configuration examples of a broadcast stream in MMT format. Fig. 3(a) illustrates a video elementary stream (video ES). The video elementary stream is divided into blocks of a predetermined size, and is placed in a payload portion of the MFU as illustrated in Fig. 3(b).

As illustrated in Fig. 3(c), an MMT payload header (MMT payload header) is added to the MFU to configure an MMTP payload (MMTP payload). As illustrated in Fig. 3(d), an MMT header (MMT header) is then further added to the MMTP payload to configure an MMT packet (MMT packet). Incidentally, there is also an MMT packet including a signaling message (signaling message) in the payload portion. As illustrated in Fig. 3(e), a UDP header, an IP header, and a TLV header are added to the MMT packet to generate a TLV packet (TLV packet) configuring a broadcast stream in MMT format.

Incidentally, although the illustration is omitted, there is also a TLV packet including an MMT packet of another component such as audio, as the TLV packet. The broadcast stream in MMT format results in having a first packet (MMT packet) including transmission media (component), and a second packet (MMT packet) including signaling information.

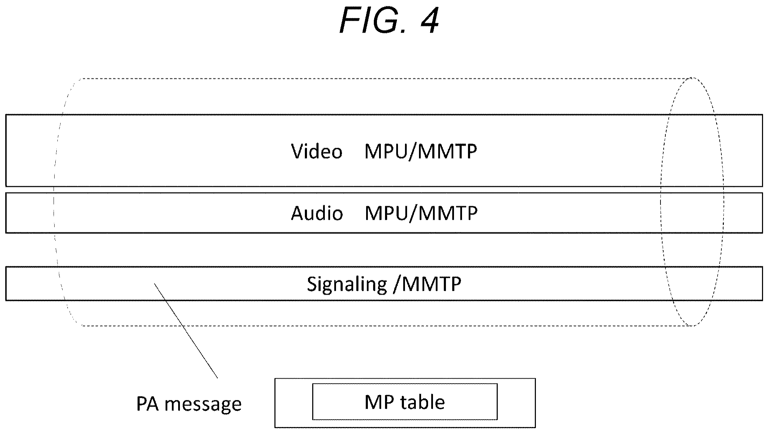

Fig. 4 illustrates an image of a broadcast signal of one channel (broadcast program) to be transmitted from the broadcast transmission system 100 to the receiving terminal 200. The broadcast signal also includes the MMT packet including the signaling message together with the MMT packets such as video and audio. There is a PA message (PA message) including, for example, an MP table (MP table), as the signaling message.

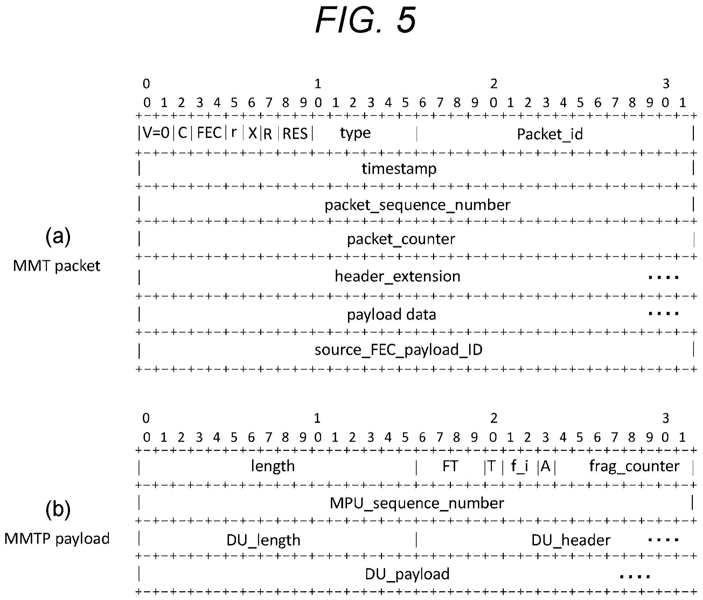

Fig. 5(a) illustrates a configuration example of the MMT packet. The MMT packet includes an MMT packet header (MMTP header) and an MMTP payload (MMTP payload). A two-bit field of "V" indicates the version of the MMT protocol. The field is set to "00" in the first version of the MMT standard. A one-bit field of "C" indicates packet counter flag (packet_counter_flag) information, and is set to "1" when a packet counter flag is present. A two-bit field of "FEC" indicates the FEC type (FEC_type).

A one-bit field of "X" indicates extension header flag (extension_flag) information, and is set to "1" when the header of the MMT packet is extended. In this case, a "header_extension" field described below is present. A one-bit field of "R" indicates RAP flag (RAP_flag) information, and is set to "1" when the MMT payload to be transmitted in the MMT packet includes the head of a random access point.

A six-bit field of "type" is payload type (payload_type) information, and indicates the data type of the MMTP payload. For example, "0×00" indicates that the payload is a media processing unit (MPU), and "0×02" indicates that the payload is a signaling message (signaling message).

A 16-bit field of "packet_id" indicates a packet identifier (packet_id) for identifying the data type of the payload. A 32-bit field of "timestamp" indicates a timestamp for transmission, that is, the time when the MMT packet is sent out from the transmission side. The time is represented in NTP short format (NTP short format). A 32-bit field of "packet_sequence_number" indicates the sequence number of an MMT packet with the same packet identifier (packet_id). A 32-bit field of "packet_counter" indicates the order of the MMT packet in the same IP data flow regardless of its packet identifier (packet _id) value.

When the above-mentioned one-bit flag information of "X" is "1", the "header_extension" field being an MMT extension header is placed after the 32-bit field of "packet_counter." After that, there are a "payload data" field and a "source_FEC_payload_ID" field, which configure the MMTP payload (MMTP payload).

Fig. 5(b) illustrates a configuration example (syntax) of the MMTP payload (MMTP payload) placed in the above-mentioned "payload data" field of the MMT packet. Incidentally, this example indicates a case of an MPU mode where "type" of the MMT header is "0×00." Firstly, there is header information. A 16-bit field of "length" indicates the byte size of the entire MMTP payload. A four-bit field of "FT" indicates a field type. "0" indicates the presence of "MPU metadata," "1" indicates the presence of "Movie Fragment metadata," and "2" indicates the presence of "MFU."

Here, the MFU (MMT fragment unit) is obtained by fractionizing, that is, fragmenting (fragment) an MPU. In the case of, for example, video, the MFU can be set to correspond to one NAL unit. Moreover, in the case of, for example, transmission on a communication network transmission path, the MFU can also be configured in one or more MTU sizes (MTU size).

Moreover, the MPU starts with a random access point (random access point: RAP), and includes one or more access units (access unit: AU). Specifically, for example, pictures of one group of pictures (GOP) may configure one MPU. The MPU is defined by asset (by component). Therefore, a video MPU including only video data is created from a video asset, and an audio MPU including only audio data is created from an audio asset.

One-bit flag information of "T" indicates whether to transmit timed media (timed media) or non-timed media (non-timed media). "1" indicates timed media, and "0" indicates non-timed media.

A two-bit field of "f_i" indicates whether or not a "DU payload" field includes an integer number of data units (data unit: DU), and includes which of the first (first), middle, and last (last) fragments (fragment) obtained by fragmenting a data unit. "0" indicates that the integer number of data units is included. "1" indicates that the first fragment is included. "2" indicates that the middle fragment is included. "3" indicates that the last fragment is included.

One-bit flag information of "A" indicates whether or not the "DU payload" field includes a plurality of data units. "1" indicates presence, and "0" indicates absence. An eight-bit field of "flag_counter" indicates the position of the fragment in sequence when "f_i" is 1 to 3.

A 32-bit field of "MPU_sequence_number" is the number indicating the order of the MPU, and is information for identifying the MPU. If, for example, one GOP configures one MPU, when "MPU_sequence_number" of a certain GOP is "i", "MPU_sequence_number" of the next GOP is "i + 1."

Fields of "DU_length," "DU_header," "DU_payload" are placed after the "MPU _sequence_number" field. The 16-bit field of "DU_length" is not present in the above-mentioned case of "A = 0," that is, if the "DU payload" field does not include a plurality of data units. Moreover, the "DU_header" field is not present if "FT = 0/1," that is, if "MPU metadata" and "Movie Fragment metadata" are included.

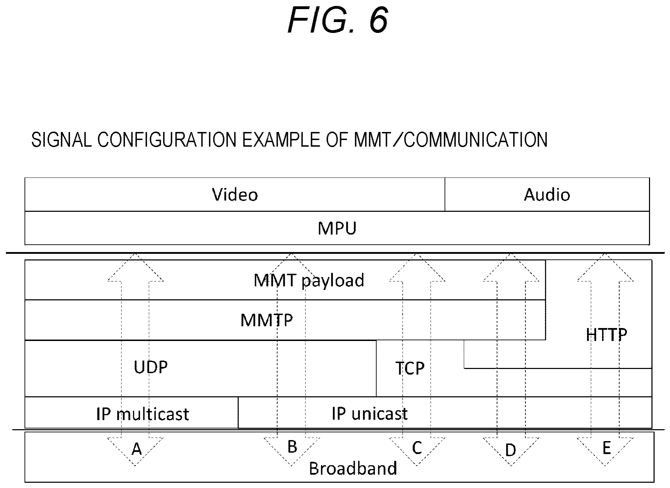

Fig. 6 illustrates a stack model of a signal configuration example of MMT/communication. (A) Multicast distribution, (B) MMTP/UDP distribution, (C) MMTP/TCP distribution, (D) MMTP/HTTP distribution, and (E) MPU/HTTP distribution are conceivable as distribution options in MMT/communication.

### "(A) Multicast distribution"

In the case of multicast distribution, an IP packet is present in a lower layer. The user datagram protocol (UDP) is on the IP packet. An MPEG media transport (MMT) packet is then on UDP. A payload portion of the MMT packet includes an MPU including encoded data of a component such as video or audio.

In the case of multicast distribution, it is the most desirable format for the hybrid broadcasting and communication use, considering a measure against congestion. Moreover, in the case of multicast distribution, transmission is efficient due to UDP transmission. However, there is a problem of packet loss. Accordingly, it may require application layer-forward error correction (AL-FEC).

Moreover, in the case of multicast distribution, only a receiving terminal connected directly to a managed network (managed network) can be used. Moreover, in the case of multicast distribution, there are a case where a multicast IP stream transmits an MMTP stream into which a plurality of assets (components) is multiplexed, and a case where a multicast IP stream transmits an MMTP stream including only a single asset.

### "(B) MMTP/UDP distribution"

In the case of MMTP/UDP distribution, an IP packet is present in a lower layer. The user datagram protocol (UDP) is on the IP packet. An MMT packet is then on UDP. A payload portion of the MMT packet includes an MPU including encoded data of a component such as video or audio.

In the case of MMTP/UDP distribution, there is a problem of congestion in the hybrid broadcasting and communication use due to unicast (unicast). Moreover, in the case of MMTP/UDP distribution, transmission is efficient due to UDP transmission. However, it may require AL-FEC. Moreover, in the case of multicast distribution, the total delay and synchronization are better than TCP.

Moreover, in the case of MMTP/UDP distribution, it can be widely used in general Internet connection devices due to unicast but may not be usable by default depending on the router settings. In the case of MMTP/UDP distribution, there are a case where an IP stream transmits an MMTP stream into which a plurality of assets (components) is multiplexed, and a case where an IP stream transmits an MMTP stream including only a single asset.

### "(C) MMTP/TCP distribution"

In the case of MMTP/TCP distribution, an IP packet is present in a lower layer. The transmission control protocol (TCP) is on the IP packet. An MMT packet is then on TCP. A payload portion of the MMT packet includes an MPU including encoded data of a component such as video or audio.

In the case of MMTP/TCP distribution, it can be widely used in general Internet connection devices due to unicast. Moreover, in the case of MMTP/TCP distribution, there is a problem of congestion in the hybrid broadcasting and communication use due to unicast. Moreover, in the case of MMTP/TCP distribution, the efficiency is sacrificed due to TCP transmission, but retransmission is possible. Accordingly, AL-FEC is not required.

Moreover, in the case of MMTP/TCP distribution, there are a case where an IP stream transmits an MMTP stream into which a plurality of assets (components) is multiplexed, and a case where an IP stream transmits an MMTP stream including only a single asset.

### "(D) MMTP/HTTP distribution"

In the case of MMTP/HTTP distribution, an IP packet is present in a lower layer. TCP is on the IP packet. The hyper text transfer protocol (HTTP) is then on TCP. Furthermore, an MMT packet is on HTTP. A payload portion of the MMT packet includes an MPU including encoded data of a component such as video or audio.

In the case of MMTP/HTTP distribution, it can be widely used in general Internet connection devices due to HTTP. Moreover, in the case of MMTP/HTTP distribution, there is a problem of congestion in the hybrid broadcasting and communication use due to unicast. Moreover, in the case of MMTP/HTTP distribution, the efficiency is sacrificed due to TCP transmission, but retransmission is possible. Accordingly, AL-FEC is not required.

Moreover, in the case of MMTP/HTTP distribution, there are a case where an IP stream transmits an MMTP stream into which a plurality of assets (components) is multiplexed, and a case where an IP stream transmits an MMTP stream including only a single asset.

### "(E) MPU/HTTP distribution"

In the case of MPU/HTTP distribution, an IP packet is present in a lower layer. TCP is on the IP packet. HTTP is then on TCP. A payload portion of the HTTP packet includes an MPU including encoded data of a component such as video or audio.

In the case of MPU/HTTP distribution, it can be widely used in general Internet connection devices due to HTTP. Moreover, in the case of MPU/HTTP distribution, there is a problem of congestion in the hybrid broadcasting and communication use due to unicast. Moreover, in the case of MPU/HTTP distribution, the efficiency is sacrificed due to TCP transmission, but retransmission is possible. Accordingly, AL-FEC is not required.

Moreover, in the case of MPU/HTTP distribution, an MMT packet is not interposed. Accordingly, the transmission efficiency is increased as compared to MMTP/HTTP distribution. Conversely, there is an issue that information of an MMTP header and the like is lost. Moreover, in the case of MPU/HTTP distribution, HTTP allows a receiving terminal to acquire each individual MPU file of a single asset (component).

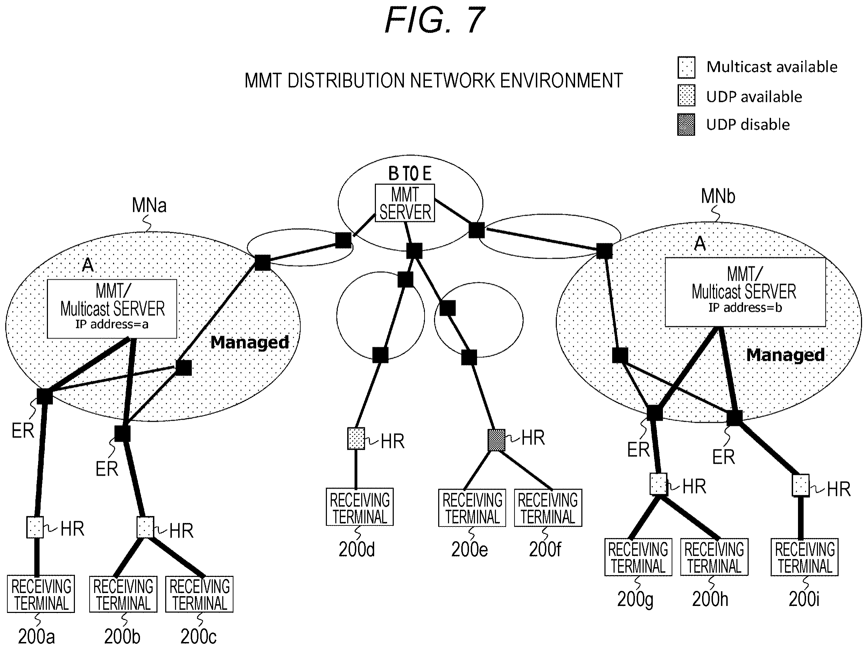

Fig. 7 illustrates an example of an MMT distribution network environment. Each of receiving terminals 200a, 200b, and 200c is configured to be connectable to an edge router (ER) of a managed network MNa via a home router (HR). Hence, these receiving terminals 200a, 200b, and 200c can receive distribution from an MMT/multicast server whose IP address in the managed network is "a" through a protocol of (A) multicast distribution.

Moreover, each of these receiving terminals 200a, 200b, and 200c is configured to be connectable to an MMT server via the home router HR, the managed network MNa, and the like. Moreover, the home routers (HR) to which these receiving terminals 200a, 200b, and 200c are connected are set in such a manner as to be able to use UDP. Hence, these receiving terminals 200a, 200b, and 200c can receive distribution from the MMT server through a protocol of any of (B) MMTP/UDP distribution, (C) MMTP/TCP distribution, (D) MMTP/HTTP distribution, and (E) MPU/HTTP distribution.

Moreover, each of receiving terminals 200g, 200h, and 200i is configured to be connectable to an edge router (ER) of a managed network MNb via a home router (HR). Hence, these receiving terminals 200g, 200h, and 200i can receive distribution from an MMT/multicast server whose IP address in the managed network is "b" through the protocol of (A) multicast distribution.

Moreover, each of these receiving terminals 200g, 200h, and 200i is configured to be connectable to the MMT server via the home router HR, the managed network MNb, and the like. Moreover, the home routers (HR) to which these receiving terminals 200g, 200h, and 200i are connected are set in such a manner as to be able to use UDP. Hence, these receiving terminals 200g, 200h, and 200i can receive distribution from the MMT server through the protocol of any of (B) MMTP/UDP distribution, (C) MMTP/TCP distribution, (D) MMTP/HTTP distribution, and (E) MPU/HTTP distribution.

Moreover, a receiving terminal 200d is configured to be connectable to the MMT server via a home router (HR). In addition, the home router (HR) to which the receiving terminal 200d is connected is set in such a manner as to be able to use also UDP. Hence, the receiving terminal 200d can also receive distribution through the protocol of any of (B) MMTP/UDP distribution, (C) MMTP/TCP distribution, (D) MMTP/HTTP distribution, and (E) MPU/HTTP distribution.

Moreover, receiving terminals 200e and 200f are configured to be connectable to the MMT server via a home router (HR). However, the home router (HR) to which these receiving terminals 200e and 200f are connected is not set in such a manner as to be able to use UDP. Hence, these receiving terminals 200e and 200f can receive distribution only through the protocol of (D) MMTP/HTTP distribution or (E) MPU/HTTP distribution.

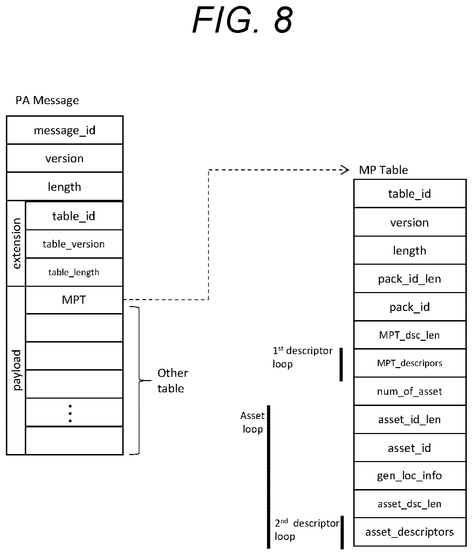

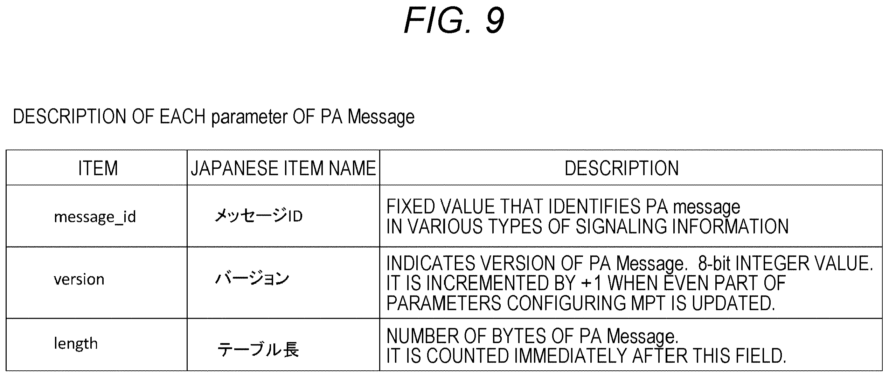

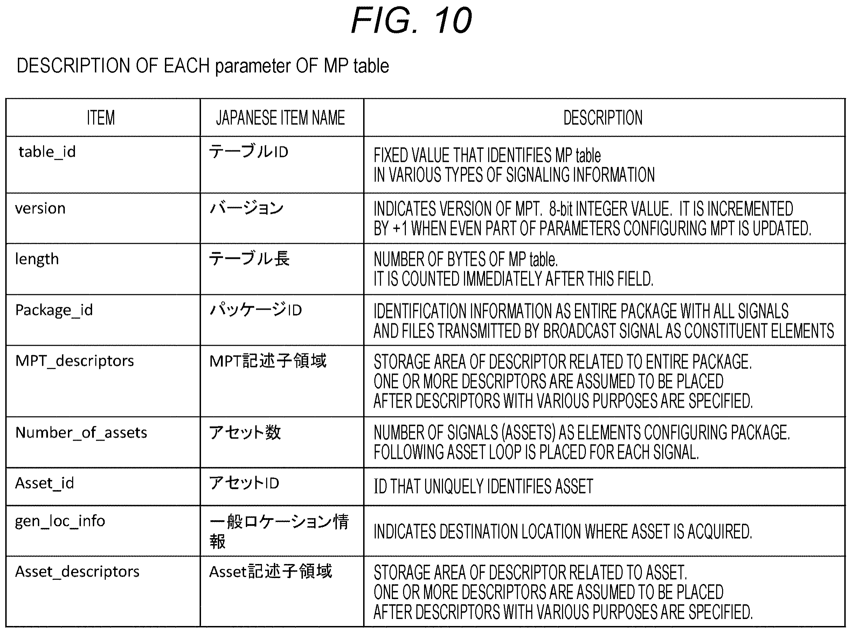

Fig. 8 schematically illustrates structures of a package access message (PA message) and an MMT package table (MP table: MPT). Moreover, Fig. 9 illustrates descriptions of main parameters of the PA message. Fig. 10 illustrates descriptions of main parameters of the MP table.

"message _id" is a fixed value that identifies the PA message in various types of signaling information. "version" is an eight-bit integer value indicating the version of the PA message. It is incremented by +1 if, for example, even a part of parameters configuring the MP table is updated. "length" is the number of bytes indicating the size of the PA message, which is counted immediately after this field.

Index information of a table placed in a payload (payload) field is placed in an "extension" field. "table_id," "table_version" and "table_length" fields are placed for each table in this field. "table _id" is a fixed value for identifying the table. "table_version" indicates the version of the table. "table_length" is the number of bytes indicating the size of the table.

An MP table (MPT) and a predetermined number of other tables (other table) are placed in the payload (payload) field of the PA message. The configuration of the MP table is described below.

"table_id" is a fixed value for identifying the MP table in various types of signaling information. "version" is an eight-bit integer value indicating the version of the MP table. It is incremented by +1 if, for example, even a part of parameters configuring the MP table is updated. "length" is the number of bytes indicating the size of the MP table, which is counted immediately after this field.

"pack _id" is identification information as an entire package having all assets (components) to be transmitted in broadcasting and communication as constituent elements. The identification information is text information. "pack_id_len" indicates the size (the number of bytes) of the text information. An "MPT_descriptors" field is a storage area of a descriptor related to the entire package. "MPT_dsc_len" indicates the size (the number of bytes) of the field.

"num_of_asset" indicates the number of assets (components) as elements configuring the package. The following asset loop is placed for each asset. "asset_id" is unique identification information of an asset (an asset ID). The identification information is text information. "asset_id_len" indicates the size (the number of bytes) of the text information. "gen_loc_info" is information indicating a destination location where an asset is acquired. An "asset_descriptors" field is a storage area of a descriptor related to the asset. "asset_dsc_len" indicates the size (the number of bytes) of the field.

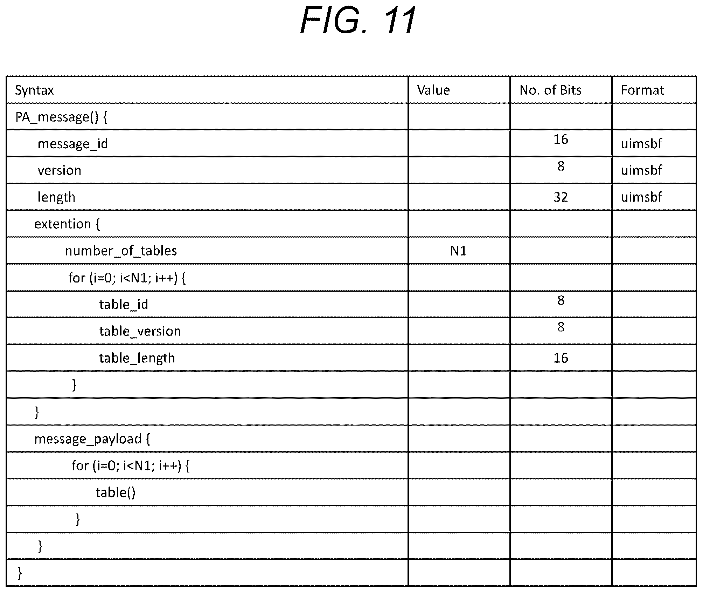

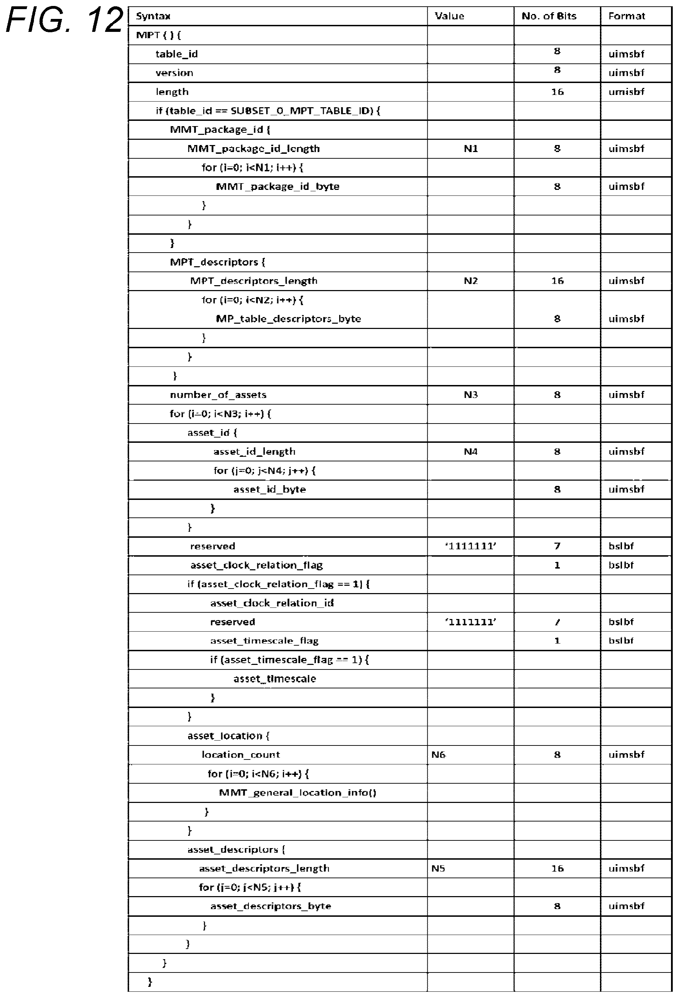

Incidentally, Fig. 11 illustrates a structural example (syntax) of the above-mentioned PA message. Moreover, Fig. 12 illustrates a structural example (syntax) of the above-mentioned MP table (MPT). The "gen_loc_info" field in Fig. 8 corresponds an "asset_location" field in Fig. 12, in which a plurality of "MMT_general_location_info()" can be placed as information indicating a destination location where the asset is acquired. Moreover, the "asset_descriptors" field in Fig. 8 corresponds to an "asset_descriptors" field in Fig. 12.

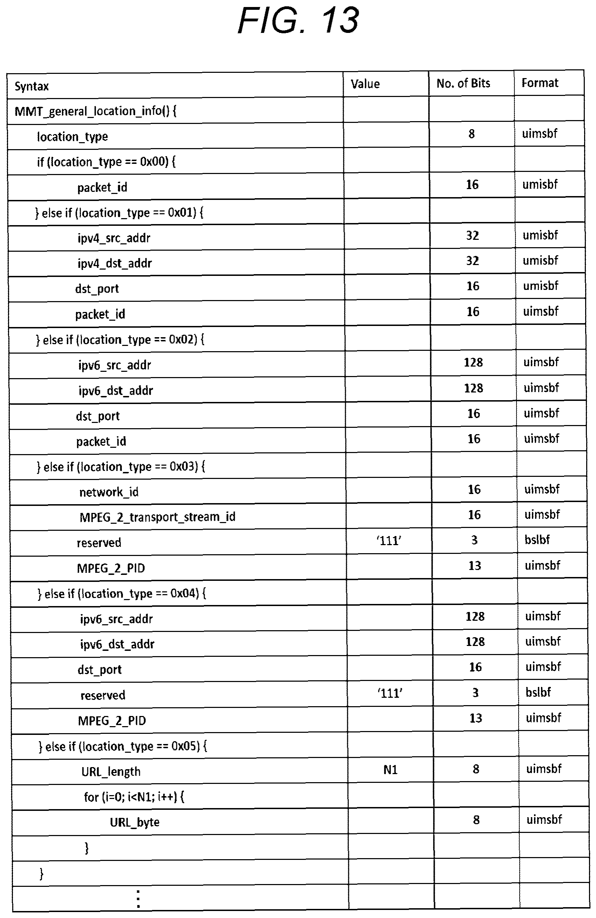

Fig. 13 illustrates part of a structural example (syntax) of "MMT_general_location_info()." An eight-bit field of "location_type" indicates the type of information indicating a destination location where the asset is acquired (hereinafter referred to as the "location information" as appropriate). In the case of an asset to be distributed through the protocol of the above-mentioned (A) multicast distribution, "location_type" is "0x01" or "0x02." A source address (ipv4_src_addr, ipv6_src_addr), a destination address (ipv4_dst_addr, ipv6_dst_ addr), a destination port number (dst_port), and a packet identifier (packet _id) are inserted as the location information. In this case, it is identified as multicast distribution from "location_type."

Moreover, in the case of an asset to be distributed through the protocol of the above-mentioned (B) MMTP/UDP distribution, (C) MMTP/TCP distribution, (D) MMTP/HTTP distribution, or (E) MPU/HTTP distribution, "location_type" is set to "0x05." A uniform resource locator (URL) is placed as the location information.

Here, in the case of the asset to be distributed through the protocol of (B) MMTP/UDP distribution, "rtsp:// ~.mmt" is specified as a schema (schema). Furthermore, a parameter that specifies UDP and a parameter that specifies a packet identifier (packet _id) are added by a query field (query field). In the end, the URL in this case is represented as in "rtsp:// ~.mmt?pr=udp&pid=1." In this case, it is identified as MMTP/UDP distribution from "rtsp" and "pr=udp."

Moreover, in the case of the asset to be distributed through the protocol of (C) MMTP/TCP distribution, "rtsp:// ~.mmt" is specified as a schema (schema). Furthermore, a parameter that specifies TCP and a parameter that specifies a packet identifier (packet _id) are added by a query field (query field). In the end, the URL in this case is represented as in "rtsp:// ~.mmt?pr=udp&pid=1." In this case, it is identified as MMTP/TCP distribution from "rtsp" and "pr=tcp."

Moreover, in the case of the asset to be distributed through the protocol of (D) MMTP/HTTP distribution, "http:// ~.mmt" is specified as a schema (schema). Furthermore, a parameter that specifies a packet identifier (packet _id) is added by a query field (query field). In the end, the URL in this case is represented as in "http:// ~.mmt?pr=pid=1." In this case, it is identified as MMTP/HTTP distribution from "http" and "mmt."

Moreover, in the case of the asset to be distributed through the protocol of (E) MPU/HTTP distribution, "http:// ~.mp4" is specified as a schema (schema). In other words, the URL in this case is represented as in "http:// ~.mp4." In this case, it is identified as MPU/HTTP distribution from "http" and "mp4."

"Insertion of Information on a Plurality of Distribution Protocols and Its Acquisition Information"

In the example, information on a plurality of distribution protocols or acquisition information for acquiring the information on the plurality of distribution protocols, is inserted into an MP table (MPT), in relation to assets (components) to be transmitted in communication, that is, specific components that are necessary to be acquired on a communication path. The information on each of the plurality of distribution protocols includes at least location information and protocol identification information. For example, the following methods 1, 2, and 3 are conceivable as an insertion method.

### "Method 1" according to the present invention

In the cases of method 1, information on a plurality of specific components (assets) is placed in the MP table (MPT). Information on one of the plurality of distribution protocols is inserted in the placed information on each of the plurality of specific components. In this case, only one "MMT_general _location_info()" is described for each individual asset (see Fig. 12).

Method 1 is further described. A description is given here, using a use case where there are two signal sets of video and audio, one of them is a main signal and accordingly transmitted in broadcasting, and the other is not the main signal and accordingly transmitted in communication. Moreover, in the use case, it is assumed that distribution is possible through three protocols of (A) multicast distribution, (D) MMTP/HTTP distribution, and (E) MPU/HTTP distribution.

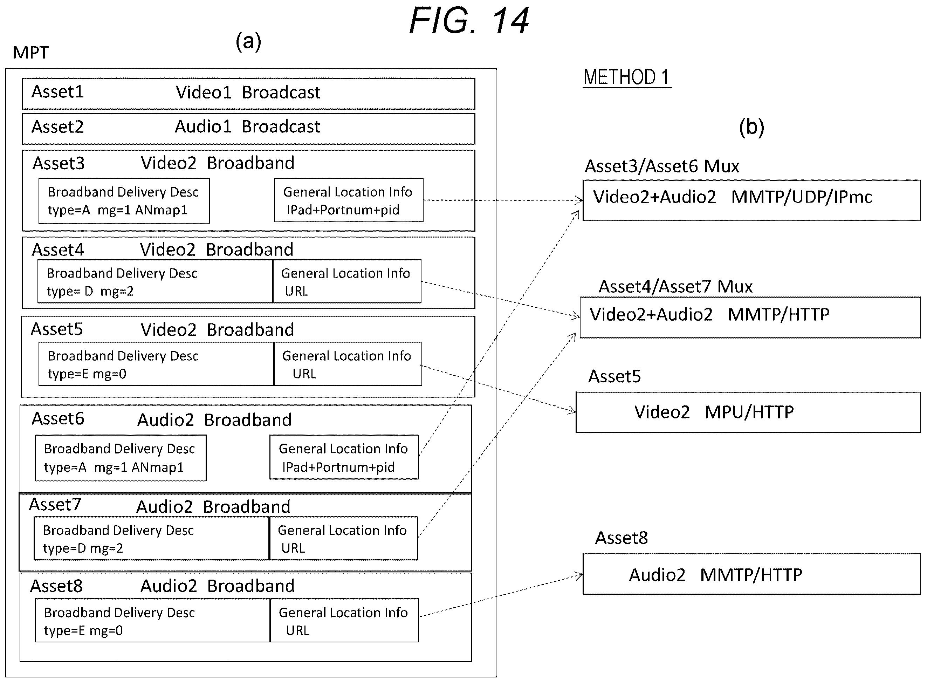

Fig. 14(a) schematically illustrates a description example of an MP table (MPT). An asset (component) of "Asset1" indicates a video signal (Video1) to be transmitted in broadcasting. An asset (component) of "Asset2" indicates an audio signal (Audio1) to be transmitted in broadcasting.

An asset (component) of "Asset3" indicates a video signal (Video2) to be transmitted in communication through the protocol of (A) multicast distribution. A source address (ipv4_src_addr, ipv6_src_addr), a destination address (ipv4_dst_addr, ipv6_dst_addr), a destination port number (dst_port), and a packet identifier (packet _id) are inserted into "MMT_general_location_info()" of this asset.

Moreover, a communication distribution descriptor (broadband_delivery_descriptor), which is newly defined, is inserted into an "asset_descriptors" field of this asset. A communication transmission protocol type (distribution protocol type) "type=broadband_delivery_type, "information "mg=multiplex_group" of another asset to be multiplexed with the asset and distributed, and information "ANmap1" on an available managed network are described in the descriptor. It is assumed here that "type" indicates (A) multicast distribution, and "mg" indicates to be multiplexed with another asset forming group 1 and distributed.

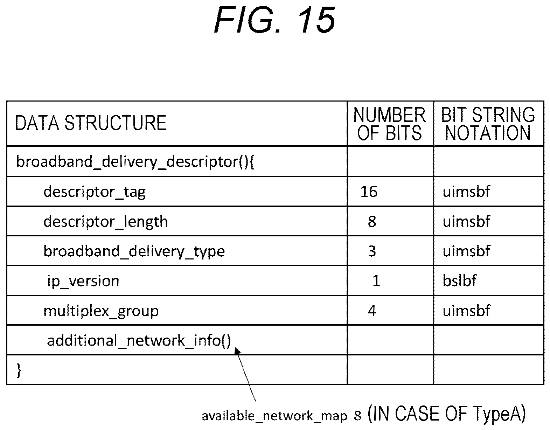

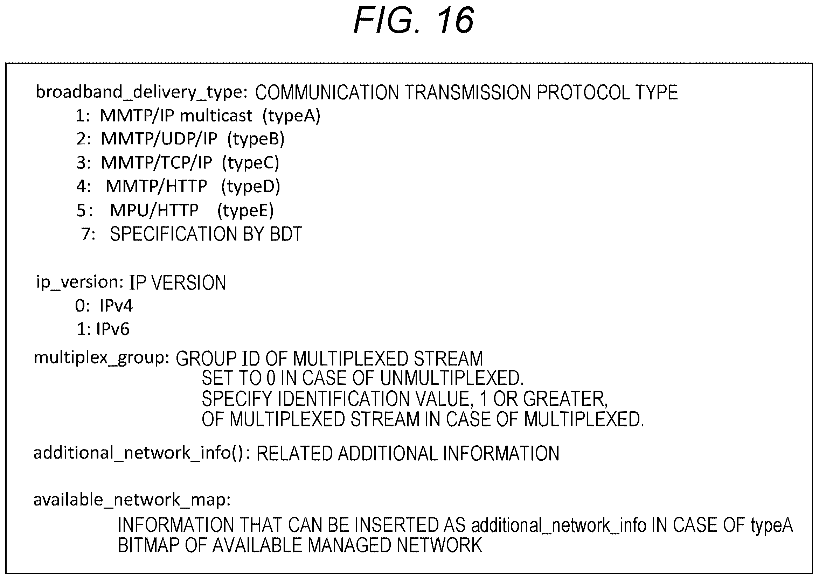

Fig. 15 illustrates a structural example (syntax) of the communication distribution descriptor (broadband_delivery_descriptor). Fig. 16 illustrates contents (semantics) of main information in the structural example. A 16-bit field of "descriptor_tag" indicates the descriptor type. Here, it indicates the communication distribution descriptor. An eight-bit field of "descriptorlength" indicates the length (size) of the descriptor, and indicates the number of subsequent bytes as the length of the descriptor.

A three-bit field of "broadband _delivery_type" indicates the communication transmission protocol type (distribution protocol type). For example, "1" indicates type A (typeA), that is, (A) multicast distribution. "2" indicates type B (typeB), that is, (B) MMTP/UDP distribution. "3" indicates type C (typeC), that is, (C) MMTP/TCP distribution. "4" indicates type D (typeD), that is, (D) MMTP/HTTP distribution. "5" indicates type E (typeE), that is, (E) MPU/HTTP distribution. Moreover, "7" indicates a specification by a BD table (BDT: broadband_delivery_table).

A one-bit field of "ip_version" indicates the IP version. For example, "0" indicates "IPv4." "1" indicates "IPv6." A four-bit field of "multiplex_group" indicates the group ID of a multiplexed stream. It is set to "0" in the case of unmultiplexed, and specifies an identification value, 1 or greater, of a multiplexed stream in the case of multiplexed.

Related additional information is placed in an "additional_network_info()" field, which is changed to an eight-bit field of "available _network_map" in the case of type A. The eight-bit field of "available_network_map" indicates the bitmap of an available managed network. In this case, bits from bit 0 to bit 7 are assigned to each carrier.

Let's return to Figs. 14(a) and 14(b). An asset (component) of "Asset4" indicates a video signal (Video2) to be transmitted in communication through the protocol of (D) MMTP/HTTP distribution. A URL is inserted into "MMT_general_location _info()" of this asset. In this case, as described above, "http:// ~.mmt" is specified as a schema (schema). Furthermore, the parameter that specifies a packet identifier (packet_id) is added by the query field (query field).

Moreover, the above-mentioned communication distribution descriptor (broadband_delivery_descriptor) is inserted into the "asset_descriptors" field of this asset (see Fig. 15). It is assumed here that "type" indicates (D) MMTP/HTTP distribution, and "mg" indicates to be multiplexed with another asset forming group 2 and distributed.

An asset (component) of "Asset5" indicates a video signal (Video2) to be transmitted in communication through the protocol of (E) MPU/HTTP distribution. A URL is inserted into "MMT_general_location_info()" of this asset. In this case, as described above, "http:// ~.mp4" is specified as a schema (schema).

Moreover, the above-mentioned communication distribution descriptor (broadband_delivery_descriptor) is inserted into the "asset_descriptors" field of this asset (see Fig. 15). It is assumed here that "type" indicates (E) MPU/HTTP distribution, and "mg" is set to "0" and indicates unmultiplexed. Consequently, the receiving side can find that "Asset5" is distributed singly, as illustrated in Fig. 14(b).

Incidentally, the description order of "Asset3", "Asset4", and "Asset5" is assumed to indicate, for example, the order of precedence.

An asset (component) of "Asset6" indicates an audio signal (Audio2) to be transmitted in communication through the protocol of (A) multicast distribution. A source address (ipv4_src_addr, ipv6_src_addr", a destination address (ipv4_dst_addr, ipv6_dst_addr), a destination port number (dst_port), and a packet identifier (packet _id) are inserted into "MMT_general _location_info()" of this asset

Moreover, the above-mentioned communication distribution descriptor (broadband_delivery_descriptor) is inserted into the "asset_descriptors" field of this asset (see Fig. 15). It is assumed here that "type" indicates (A) multicast distribution. The information "ANmap1" on an available managed network is also described.

Moreover, "mg" is assumed to indicate to be multiplexed with another asset forming group 1 and distributed. Consequently, the receiving side can find that "Asset6" is multiplexed with the above-mentioned "Asset3" and distributed as illustrated in Fig. 14(b). The receiving side can obtain both of "Asset3" and "Asset6" from the multiplexed stream.

An asset (component) of "Asset7" indicates an audio signal (Audio2) to be transmitted in communication through the protocol of (D) MMTP/HTTP distribution. A URL is inserted into "MMT_general_location_info()" of this asset. In this case, as described above, "http:// ~.mmt" is specified as a schema (schema). Furthermore, the parameter that specifies a packet identifier (packet _id) is added by the query field (query field).

Moreover, the above-mentioned communication distribution descriptor (broadband_delivery_descriptor) is inserted into the "assetdescriptors" field of this asset (see Fig. 15). It is assumed here that "type" indicates (D) MMTP/HTTP distribution, and "mg" indicates to be multiplexed with another asset forming group 2 and distributed. Consequently, the receiving side can find that "Asset7" is multiplexed with the above-mentioned "Asset4" and distributed, as illustrated in Fig. 14(b). The receiving side can obtain both of "Asset4" and "Asset7" from the multiplexed stream.

An asset (component) of "Asset8" indicates an audio signal (Audio2) to be transmitted in communication through the protocol of (E) MPU/HTTP distribution. A URL is inserted into "MMT_general_location_info()" of this asset. In this case, as described above, "http:// ~.mp4" is specified as a schema (schema).

Moreover, the above-mentioned communication distribution descriptor (broadband_delivery_descriptor) is inserted into the "asset_descriptors" field of this asset (see Fig. 15). It is assumed here that "type" indicates (E) MPU/HTTP distribution, and "mg" is set to "0" and indicates unmultiplexed. Consequently, the receiving side can find that "Asset8" is distributed singly, as illustrated in Fig. 14(b).

Incidentally, the description order of "Asset6", "Asset7", and "Asset8" is assumed to indicate, for example, the order of precedence.

### "Method 2" according to the present invention

In the cases of method 2, information on one specific component (asset) is placed in the MP table (MPT). The information on the plurality of distribution protocols is inserted in the placed information on the one specific component. In this case, a plurality of "MMT_general_location_info()" is described for each individual asset (see Fig. 12). In the MP table, "MMT_general_location_info()" is looped; accordingly, a plurality of "MMT_general _location_info()" can be described.

Method 2 is further described. A description is given here, using a use case where, as in the above-mentioned description of "method 1," there are two signal sets of video and audio, one of them is a main signal and accordingly transmitted in broadcasting, and the other is not the main signal and accordingly transmitted in communication. Moreover, in the use case, it is assumed that distribution is possible through three protocols of (A) multicast distribution, (D) MMTP/HTTP distribution, and (E) MPU/HTTP distribution.

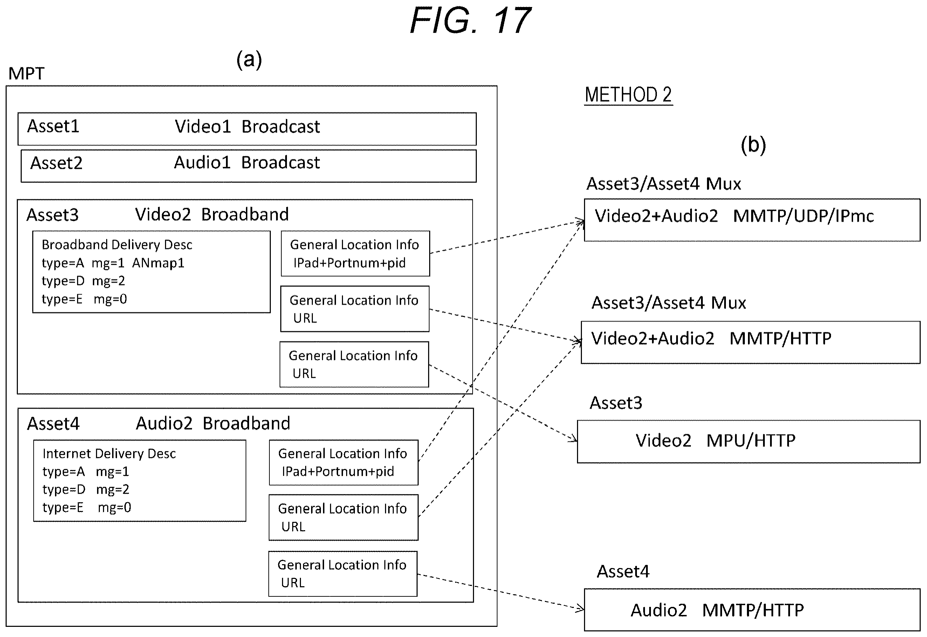

Fig. 17(a) schematically illustrates a description example of an MP table (MPT). An asset (component) of "Asset1" indicates a video signal (Video1) to be transmitted in broadcasting. An asset (component) of "Asset2" indicates an audio signal (Audio1) to be transmitted in broadcasting.

An asset (component) of "Asset3" indicates a video signal (Video2) to be transmitted in communication. Three "MMT_general_location_info()" are described in the "asset_location" field of this asset.

Location information in the case of (A) multicast distribution having the highest priority is inserted into the first "MMT_general _location_info()." In other words, a source address (ipv4_src_addr, ipv6_src_addr", a destination address (ipv4_dst_addr, ipv6_dst_addr), a destination port number (dst_port), and a packet identifier (packet _id) are inserted into this "MMT_general _location_info()."

Location information in the case of (D) MMTP/HTTP distribution having the next highest priority is inserted into the second "MMT_general_location_info()." In other words, a URL is inserted into this "MMT_general_location_info()." In this case, as described above, "http:// ~.mmt" is specified as a schema (schema). Furthermore, the parameter that specifies a packet identifier (packet _id) is added by the query field (query field).

Location information in the case of (E) MPU/HTTP distribution having the lowest priority is inserted into the third "MMT_general _location_info()." In other words, a URL is inserted into this "MMT_general_location_info()." In this case, as described above, "http:// ~.mp4" is specified as a schema (schema).

Moreover, the communication distribution descriptor (broadband_delivery_descriptor), which is newly defined, is inserted into the "asset_descriptors" field of this asset. The communication transmission protocol type (distribution protocol type) "type=broadband_delivery_type" corresponding to the above-mentioned three "MMT_general_location_info()" and the information "mg=multiplex_group" on another asset to be multiplexed with the asset and distributed are described in the descriptor. Incidentally, if the location information in the case of (A) multicast distribution is inserted into "MMT_general_location_info()", the information "ANmap" on an available managed network is also further described.

It is assumed here that "type" indicates (A) multicast distribution corresponding to the first "MMT_general_location_info()," and "mg" indicates to be multiplexed with another asset forming group 1 and distributed. Moreover, "ANmap" is set as "ANmap1," and indicates an available managed network.

Moreover, it is assumed that "type" indicates (D) MMTP/HTTP distribution corresponding to the second "MMT_general_location_info()," and "mg" indicates to be multiplexed with another asset forming group 2 and distributed.

Moreover, it is assumed that "type" indicates (E) MPU/HTTP distribution corresponding to the third "MMT_general_location_info()," and "mg" is set to "0" and indicates unmultiplexed. Consequently, as illustrated in Fig. 17(b), the receiving side can find that "Asset3" is distributed singly in the case of (E) MPU/HTTP distribution.

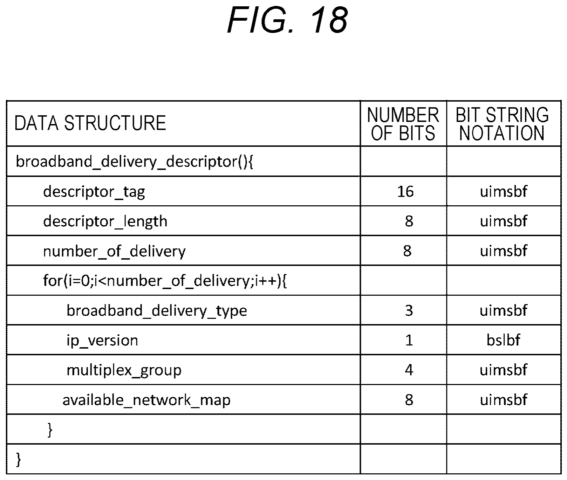

Fig. 18 illustrates a structural example (syntax) of the communication distribution descriptor (broadband_delivery_descriptor). The 16-bit field of "descriptortag" indicates the descriptor type. Here, it indicates the communication distribution descriptor. The eight-bit field of "descriptorlength" indicates the length (size) of the descriptor, and indicates the number of subsequent bytes as the length of the descriptor.

An eight-bit field of "number_of_delivery" indicates the number of distributable distribution protocols. The three-bit field of "broadband_delivery_type," the one-bit field of "ip_version," the four-bit field of "multiplex_group," and the eight-bit field of "available _network_map" are repeated by the number of distribution protocols.

The three-bit field of "broadband_delivery_type" indicates the communication transmission protocol type (distribution protocol type) (see Fig. 16). For example, "1" indicates type A (typeA), that is, (A) multicast distribution. "2" indicates type B (typeB), that is, (B) MMTP/UDP distribution. "3" indicates type C (typeC), that is, (C) MMTP/TCP distribution. "4" indicates type D (typeD), that is, (D) MMTP/HTTP distribution. "5" indicates type E (typeE), that is, (E) MPU/HTTP distribution. Moreover, "7" indicates a specification by BDT (broadband_delivery_Table).

The one-bit field of "ip_version" indicates the IP version (see Fig. 16). For example, "0" indicates "IPv4." "1" indicates "IPv6." The four-bit field of "multiplex_group" indicates the group ID of a multiplexed stream (see Fig. 16). It is set to "0" in the case of unmultiplexed, and specifies an identification value, 1 or greater, of a multiplexed stream in the case of multiplexed. The eight-bit field of "available _network_map" indicates the bitmap of an available managed network. In this case, bits from bit 0 to bit 7 are assigned to each carrier (see Fig. 16).

Incidentally, excluding the case of (A) multicast distribution where "broadband_delivery_type" is set to "1", all of bit 0 to bit 7 in the eight-bit field of "available _network_map" are set to "0". This field is substantially not used.

An asset (component) of "Asset4" indicates an audio signal (Audio2) to be transmitted in communication. Three "MMT_general_location_info()" are described in the "asset_location" field of this asset.

Location information in the case of (A) multicast distribution having the highest priority is inserted into the first "MMT_general _location_info()." In other words, a source address (ipv4_src_addr, ipv6_src_addr), a destination address (ipv4_dst_addr, ipv6_dst_addr), a destination port number (dst_port), and a packet identifier (packet _id) are inserted into this "MMT_general_location_info()".

Location information in the case of (D) MMTP/HTTP distribution having the next highest priority is inserted into the second "MMT_general_location_info()." In other words, a URL is inserted into this "MMT_general_location_info()." In this case, as described above, "http:// ~.mmt" is specified as a schema (schema). Furthermore, the parameter that specifies a packet identifier (packet _id) is added by the query field (query field).

Location information in the case of (E) MPU/HTTP distribution having the lowest priority is inserted into the third "MMT_general _location_info()." In other words, a URL is inserted into this "MMT_general_location_info()." In this case, as described above, "http:// ~.mp4" is specified as a schema (schema).

Moreover, the above-mentioned communication distribution descriptor (broadband_delivery_descriptor) is inserted into the "asset_descriptors" field of this asset (see Fig. 18). The communication transmission protocol type (distribution protocol type) "type=broadband_delivery_type" corresponding to the above-mentioned three "MMT_general_location_info()," and the information "mg=multiplex_group" on another asset to be multiplexed with the asset and distributed are described in the descriptor. Incidentally, if the location information in the case of (A) multicast distribution is inserted into "MMT_general_location_info()", the information "ANmap" on an available managed network is also further described.

It is assumed here that "type" indicates (A) multicast distribution corresponding to the first "MMT_general_location_info()," and "ANmap" is set as "ANmap1" to indicate an available managed network. Moreover, "mg" is assumed to be multiplexed with another asset forming group 1 and distributed. Consequently, as illustrated in Fig. 17(b), the receiving side can find that "Asset4" is multiplexed with the above-mentioned "Asset3" and distributed in the case of (A) multicast distribution. The receiving side can obtain both of "Asset3" and "Asset4" from the multiplexed stream.

Moreover, it is assumed that "type" indicates (D) MMTP/HTTP distribution corresponding to the second "MMT_general_location_info()," and "mg" indicates to be multiplexed with another asset forming group 2 and distributed. Consequently, as illustrated in Fig. 17(b), the receiving side can find that "Asset4" is multiplexed with the above-mentioned "Asset3" and distributed in the case of (D) MMTP/HTTP distribution. The receiving side can obtain both of "Asset3" and "Asset4" from the multiplexed stream.

Moreover, it is assumed that "type" indicates (E) MPU/HTTP distribution corresponding to the third "MMT_general_location_info()," and "mg" is set to "0" to indicate unmultiplexed. Consequently, as illustrated in Fig. 17(b), the receiving side can find that "Asset4" is distributed singly in the case of (E) MPU/HTTP distribution.

### "Method 3" (background art useful for understanding the invention)

In the cases of example method 3, information on one specific component (asset) is placed in the MP table (MPT). Acquisition information for acquiring information on a plurality of distribution protocols is inserted into the placed information on the one specific component. In this case, only one "MMT_general _location_info()" is described for each individual asset (see Fig. 12).

Method 3 is further described. As in the above-mentioned descriptions of "method 1" and "method 2," a description is given here, using a use case where there are two signal sets of video and audio, one of them is a main signal and accordingly transmitted in broadcasting, and the other is not the main signal and accordingly transmitted in communication. Moreover, in the use case, it is assumed that distribution is possible through three protocols of (A) multicast distribution, (D) MMTP/HTTP distribution, and (E) MPU/HTTP distribution.

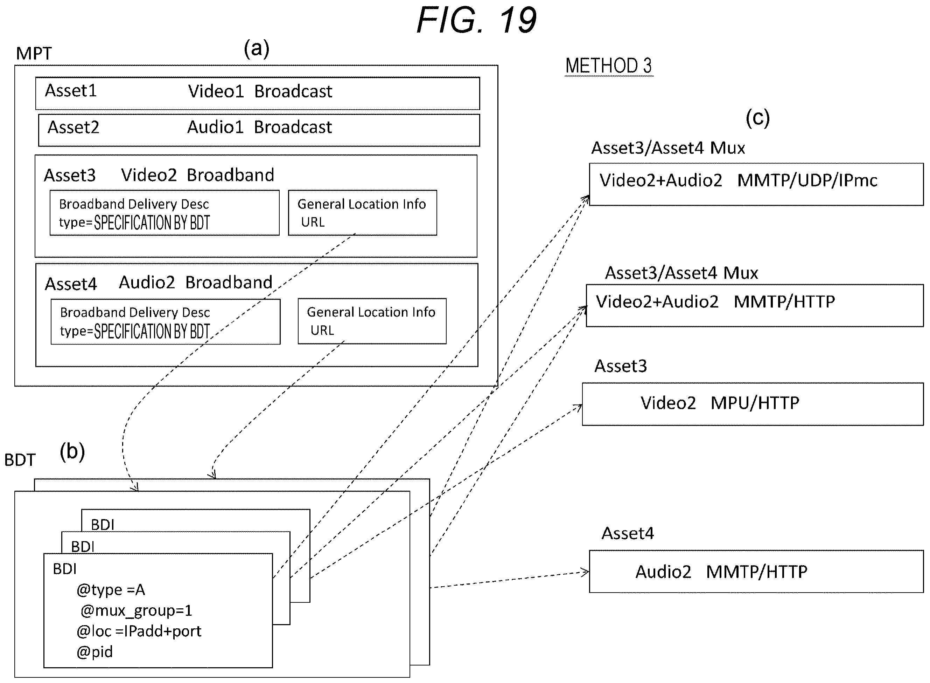

Fig. 19(a) schematically illustrates a description example of an MP table (MPT). An asset (component) of "Asset1" indicates a video signal (Video1) to be transmitted in broadcasting. An asset (component) of "Asset2" indicates an audio signal (Audio1) to be transmitted in broadcasting.

An asset (component) of "Asset3" indicates a video signal (Video2) to be transmitted in communication. One "MMT_general_location_info()" is described in the "assetlocation" field of this asset. For example, a URL is inserted into the "MMT_general_location_info()" as the acquisition information, related to "Asset3", for acquiring the information on the plurality of distribution protocols. The receiving side refers to the URL, and acquires a broadband delivery table (BD table: BDT) as a metafile including the information on the plurality of distribution protocols via a communication network (see Fig. 19(b)).

The BD table includes broadband delivery information (BD information: BDI) being information on a distribution protocol corresponding to each of the three protocols of (A) multicast distribution, (D) MMTP/HTTP distribution, and (E) MPU/HTTP distribution. The contents of the BD information corresponding to each protocol are substantially the same as, for example, the contents of the information inserted into "MMT_general _location_info()"and the communication distribution descriptor (broadband_delivery_descriptor) of "Asset3" in the above-mentioned "method 2."

Incidentally, for example, the communication distribution descriptor (broadband_delivery_descriptor) in the above-mentioned "method 1" (see Fig. 15) is inserted into the "asset_descriptors" field of this asset. "type=broadband_delivery_type" is set to "7", which indicates that the information on the plurality of distribution protocols is specified by the BD table.

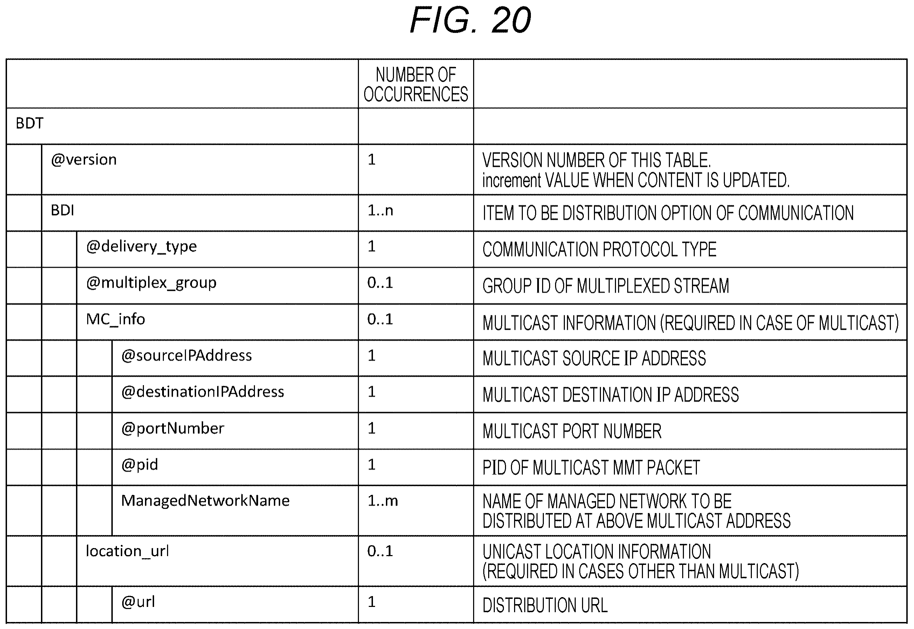

Fig. 20 illustrates a structural example (syntax) of the BD table and the content (semantics) of each piece of the information. The BD table is described in XML format. Information of "@version" is the version number of the table. "BDI" is an item of BD information being a communication distribution option and a predetermined number of "BDI" occur. Three BDI occur here since it is assumed that distribution is possible through the three protocols of (A) multicast distribution, (D) MMTP/HTTP distribution, and (E) MPU/HTTP distribution. This description order is, incidentally, assumed to indicate the order of precedence.

"BDI" includes "@delivery_type" and "@multiplex_group." "@delivery_type" is the communication protocol type, and corresponds to "broadband_delivery_type" in the communication distribution descriptor of Fig. 18. "@multiplex_group" is the group ID of a multiplexed stream, and corresponds to "multiplex_group" in the communication distribution descriptor of Fig. 18. In the case of unmultiplexed, this descriptor does not occur, or a group ID indicating unmultiplexed is described.

Moreover, "BDI" includes "MC_info" and "location_url." Both of "MC_info" and "location_url" are items of location information. They are, for example, the item of information inserted into "MMT_general_location_info()" in the above-mentioned "method 1" and "method 2." "MC_info" is multicast information. "location_url" is unicast location information. Either of them occurs. If multicast distribution is described as the communication protocol type in "@delivery_type," "MC_info" occurs, otherwise "location_url" occurs.

"MC_info" includes "@sourceIPAddress," "@destinationIPAddress," "@portNumber," "@pid," and "ManagedNetworkName." "@sorceIPAddress" is the multicast source IP address. "@destinationIPAddress" is a multicast destination IP address. "@portNumber" is a multicast port number. "@pid" is the PID of a multicast MMT packet. "ManagedNetworkName" is the name of a managed network to be distributed at the multicast address. "location _url" includes "@url". "@url" is a distribution URL.

Let's return to the examples in Figs. 19(a) to 19(c). An asset (component) of "Asset4" indicates an audio signal (Audio2) to be transmitted in communication. One "MMT_general_location_info()" is described in the "asset_location" field of this asset. For example, a URL is inserted into "MMT_general_location_info()," as acquisition information, related to "Asset4", for acquiring information on a plurality of distribution protocols. The receiving side refers to the URL to acquire a broadband delivery table (BD table: BDT) as a metafile including the information on the plurality of distribution protocols via a communication network (see Fig. 19(b)).

The BD table includes broadband delivery information (BD information: BDI) being information on a distribution protocol corresponding to each of three protocols of (A) of multicast distribution, (D) MMTP/HTTP distribution, and (E) MPU/HTTP distribution. The contents of the BD information corresponding to each protocol are substantially the same as, for example, the contents of information inserted into "MMT_general_location_info()" and the communication distribution descriptor (broadband_delivery_descriptor) of "Asset4" in the above-mentioned "method 2."

Incidentally, for example, the communication distribution descriptor (broadband_delivery_descriptor) in the above-mentioned "method 1" (see Fig. 15) is inserted into the "asset_descriptors" field of this asset. "type=broadband_delivery_type" is set to "7", which indicates that the information on the plurality of distribution protocols is specified by the BD table.

Also in this example method 3, the description of "@multiplex_group" of the BD table allows the receiving side to easily recognize such a multiplexing relationship of "Asset3" and "Asset4" as illustrated din Fig. 19(c). In other words, in the case of (E) MPU/HTTP distribution, it is found that each of "Asset3" and "Asset4" is distributed singly. Moreover, in the case of (A) multicast distribution, it is found that "Asset3" and "Asset4" are multiplexed and distributed. Moreover, in the case of (D) MMTP/HTTP distribution, it is found that "Asset3" and ""Asset4" are multiplexed and distributed.

### [Receiving Terminal's Process of Acquiring a Component (Asset) on a Communication Path]

Next, the receiving terminal 200's process of acquiring a specific component (asset) on a communication path is described. The receiving terminal 200 selects one receivable distribution protocol from information on a plurality of distribution protocols described in an MP table (MPT) acquired from a broadcast signal, and receives the specific component through this distribution protocol.

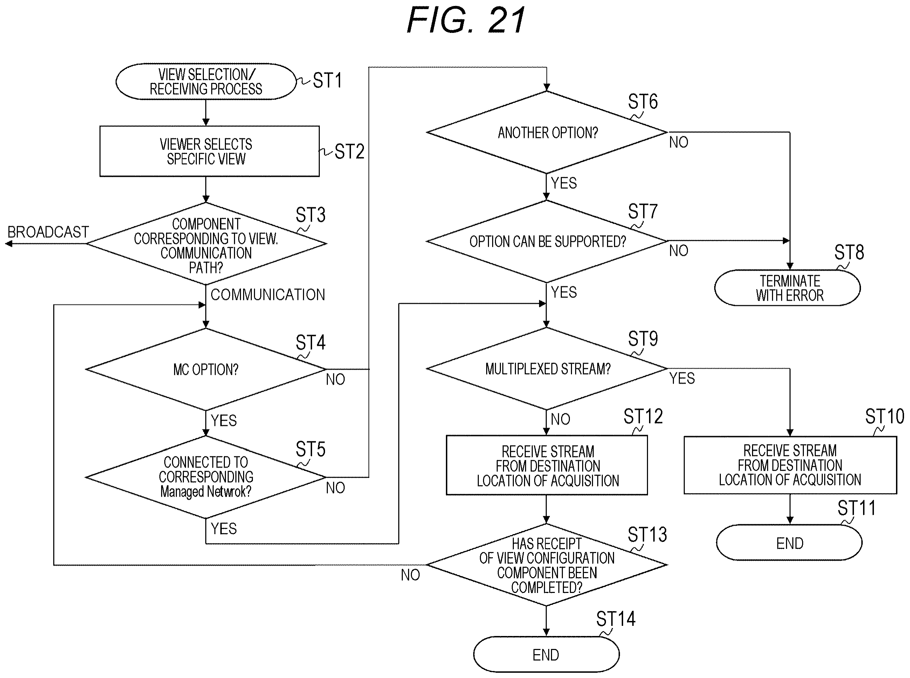

A flowchart of Fig. 21 illustrates an example of a view selection/receiving process in the receiving terminal 200. In step ST1, the receiving terminal 200 starts the view selection/receiving process. The receiving terminal 200 subsequently moves to a process of step ST3 when a viewer selected a specific view in step ST2.

In step ST3, the receiving terminal 200 judges whether it is necessary to acquire a component corresponding to the selected view on a communication or broadcast path. When the component is to be acquired on the broadcast path, the receiving terminal 200 acquires the component from the broadcast signal. On the other hand, when the component is to be acquired on the communication path, the receiving terminal 200 moves to a process of step ST4.

In step ST4, the receiving terminal 200 judges whether or not multicast distribution (multicast option) can be selected. The receiving terminal 200 makes the judgement on the basis of information on a plurality of distribution protocols described in an MP table (MPT). When multicast distribution can be selected, the receiving terminal 200 judges in step ST5 whether or not to be connected to a corresponding managed network. When connected to the corresponding managed network, the receiving terminal 200 selects multicast distribution as a distribution protocol, and moves to a process of step ST9.

When the multicast option is not selectable in step ST4, or when the receiving terminal 200 is not connected to the corresponding managed network in step ST5, the receiving terminal 200 moves to a process of step ST6. In step ST6, the receiving terminal 200 judges whether or not any other distribution protocol (any other option) except multicast distribution is selectable. The receiving terminal 200 makes the judgment on the basis of the information on the plurality of distribution protocols described in the MP table (MPT).

When any other distribution protocol is selectable, the receiving terminal 200 judges in step ST7 whether or not to be able to support the other distribution protocol. When being able to support it, the receiving terminal 200 selects the other distribution protocol as the distribution protocol, and moves to a process of step ST9. In this case, if there is a plurality of distribution protocols that the receiving terminal 200 itself can support, the receiving terminal 200 selects a distribution protocol with the highest priority.

When any other distribution protocol is not selectable in step ST6, or when the receiving terminal 200 itself cannot support the other distribution protocol in step ST7, the receiving terminal 200 terminates with an error in step ST8.

In step ST9, the receiving terminal 200 judges whether or not a stream to be received through multicast distribution or the other distribution protocol is a multiplexed stream also including a component other than a relevant component. When it is a multiplexed stream, the stream is received from a destination location of acquisition in step ST10, and ends the process in step ST11.

When it is not a multiplexed stream, the receiving terminal 200 receives the stream from the destination location of acquisition in step ST12, and subsequently moves to a process of step ST13. In step ST13, the receiving terminal 200 judges whether or not to have completed the receipt of view configuration components. When having not completed the receipt, the receiving terminal 200 returns to the processing of step ST4, and repeats processing similar to the above-mentioned processing. On the other hand, when having completed the receipt, the receiving terminal 200 ends the process in step ST14.

Incidentally, in the above-mentioned view selection/receiving process, the multiplexed stream is assumed to include all the view configuration components. It is, for example, a case where the view configuration components include video and audio components.

### "Receive Sequence"

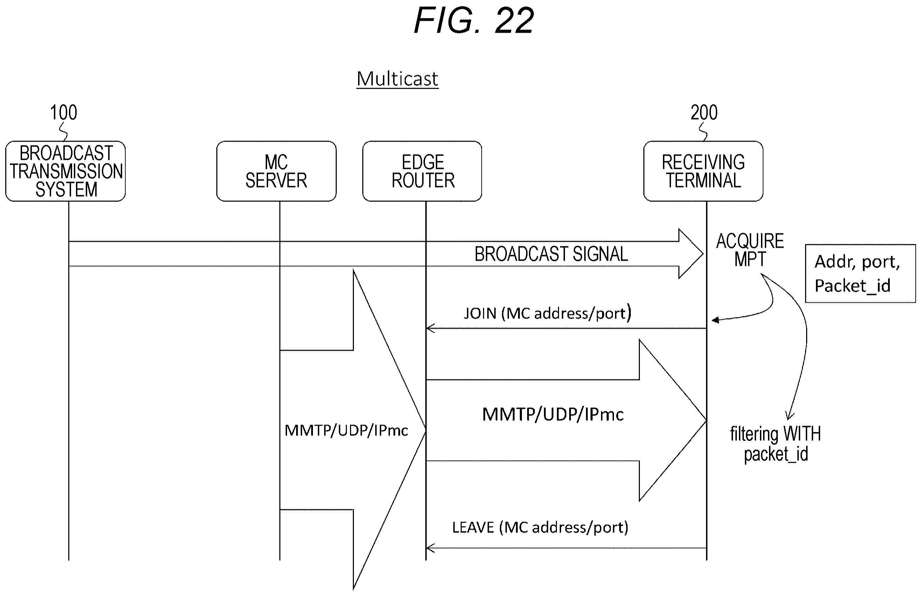

Next, a receive sequence in the receiving terminal 200 is described. Firstly, a case of receiving an asset distributed through the protocol of (A) multicast distribution is described with reference to Fig. 22. In the case of multicast distribution, a multicast server (MC server) is present.

The receiving terminal 200 receives a broadcast signal, and acquires an MP table (MPT). The receiving terminal 200 obtains, from the MP table, location information of the asset distributed through the protocol of multicast distribution. The location information in this case includes a source address, a destination address, a destination port number, and a packet identifier. In this case, the receiving terminal 200 can identify it as multicast distribution from the location type.

In this case, the receiving terminal 200 transmits, to an edge router, a join message (JOIN message) to which the multicast address and the port number, which are included in the location information, have been added. With the transmission of the join message, a multicast IP stream from the multicast server is transmitted to the receiving terminal 200 via an edge filter.

In the receiving terminal 200, filtering is performed with the packet identifier (packet_id) included in the location information to obtain a target asset (component) from the multicast IP stream. When leaving the receive status, the receiving terminal 200 transmits, to the edge router, a leave message (LEAVE message) to which the multicast address and the port number have been added.

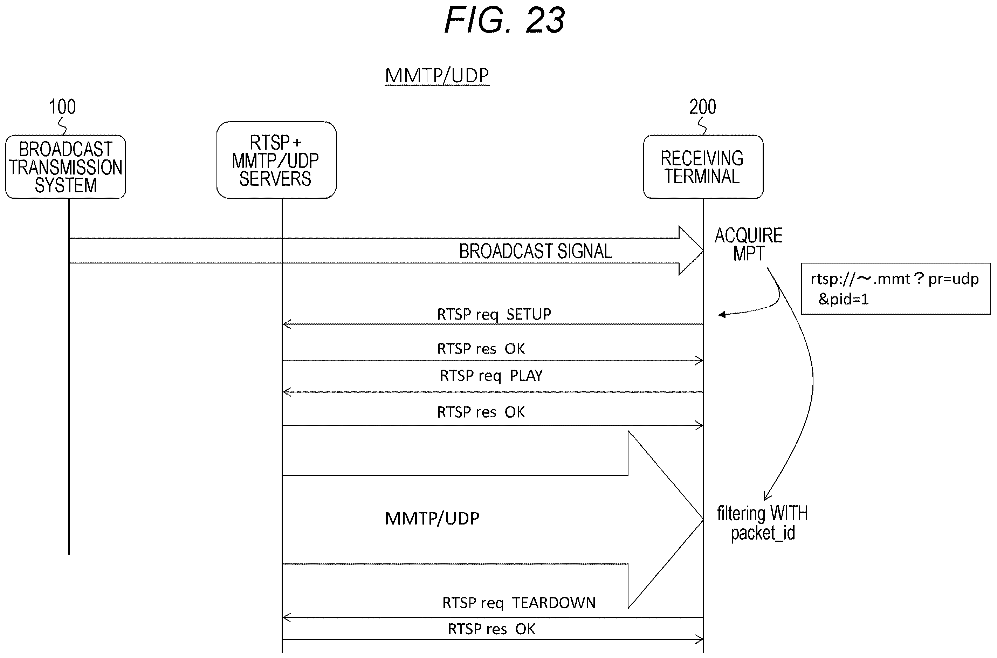

Next, a case of receiving an asset distributed through the protocol of (B) MMTP/UDP distribution is described with reference to Fig. 23. In the case of MMTP/UDP distribution, a protocol of the real time streaming protocol (RTSP) is used. In the case of MMTP/UDP distribution, an RTSP server and an MMTP/UDP server are present. These servers are present as separate devices or the same device. The illustrated example illustrates the case where the servers are present as the same device.

The receiving terminal 200 receives a broadcast signal, and acquires an MP table (MPT). The receiving terminal 200 obtains, from the MP table, location information of the asset distributed through the protocol of MMTP/UDP distribution. The location information in this case is a URL. "rtsp:// ~.mmt" is specified as a schema. Furthermore, a parameter that specifies UDP and a parameter that specifies a packet identifier are added by a query field. In this case, the receiving terminal 200 can identify it as MMTP/UDP distribution from "rtsp" and "pr=udp."

The receiving terminal 200 transmits an RTSP request of "SETUP." At this point in time, the receiving terminal 200 inserts the location information into an RTSP header. In this case, as the location information, all pieces of the location information acquired from the MP table are inserted, or the location information is inserted excluding the parameter that specifies the packet identifier. The RTSP request is transmitted to a target server. The server transmits an "OK" response.

Thereafter, the receiving terminal 200 subsequently transmits an RTSP request of "PLAY." In response to this, the target server transmits an "OK" response. At the same time, the MMTP/UDP server transmits a transport stream to the receiving terminal 200. In the receiving terminal 200, filtering is performed with the packet identifier (packet _id) included in the location information to obtain a target asset (component) from the stream. When leaving the receive status, the receiving terminal 200 transmits an RTSP request of "TEARDOWN." In response to this, the server transmits an "OK" response.

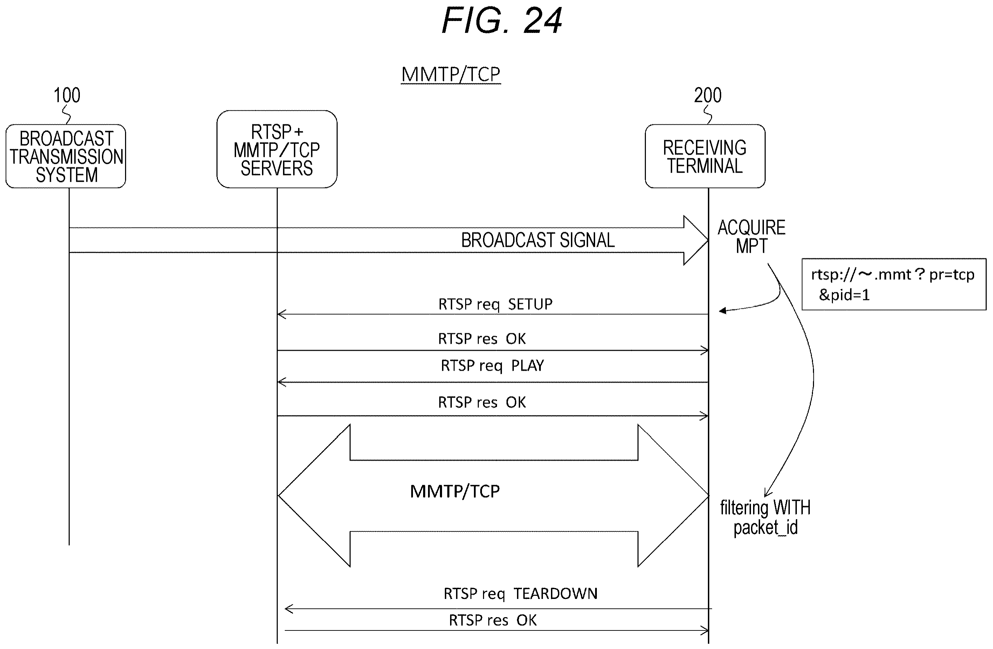

Next, a case of receiving an asset distributed through the protocol of (C) MMTP/TCP distribution is described with reference to Fig. 24. Also in the case of MMTP/TCP distribution, the protocol of the real time streaming protocol (RTSP) is used. In the case of MMTP/TCP distribution, an RTSP server and an MMTP/TCP server are present. These servers are present as separate devices or the same device. The illustrated example illustrates the case where the servers are present as the same device.

The receiving terminal 200 receives a broadcast signal, and acquires an MP table (MPT). The receiving terminal 200 obtains, from the MP table, location information of the asset distributed through the protocol of MMTP/TCP distribution. The location information in this case is a URL. "rtsp:// ~.mmt" is specified as a schema. Furthermore, a parameter that specifies TCP and a parameter that specifies a packet identifier are added by a query field. In this case, the receiving terminal 200 can identify it as MMTP/TCP distribution from "rtsp" and "pr=tcp."

The receiving terminal 200 transmits an RTSP request of "SETUP." At this point in time, the receiving terminal 200 inserts the location information into an RTSP header. In this case, as the location information, all pieces of the location information acquired from the MP table are inserted, or the location information is inserted excluding the parameter that specifies the packet identifier. The RTSP request is transmitted to a target server. The server transmits an "OK" response.

Thereafter, the receiving terminal 200 subsequently transmits an RTSP request of "PLAY." In response to this, the target server transmits an "OK" response. At the same time, the MMTP/TCP server transmits a transport stream to the receiving terminal 200. In the receiving terminal 200, filtering is performed with the packet identifier (packet _id) included in the location information to obtain a target asset (component) from the stream. When leaving the receive status, the receiving terminal 200 transmits an RTSP request of "TEARDOWN." In response to this, the server transmits an "OK" response.

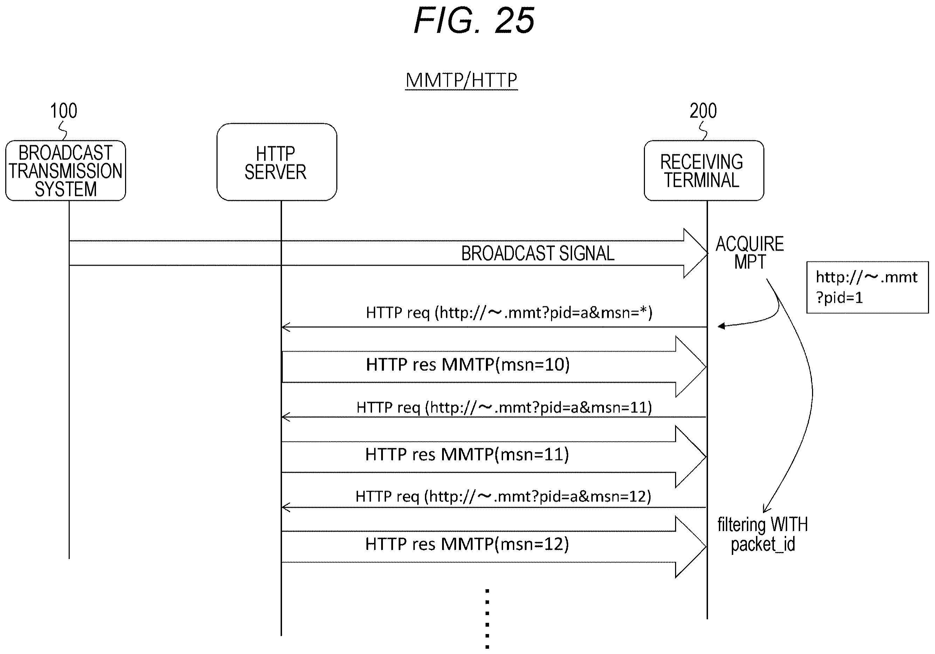

Next, a case of receiving an asset distributed through the protocol of (D) MMTP/HTTP distribution is described with reference to Fig. 25. In the case of MMTP/HTTP distribution, the protocol of the hyper text transfer protocol (HTTP) is used. In the case of MMTP/HTTP distribution, an HTTP server is present.

The receiving terminal 200 receives a broadcast signal, and acquires an MP table (MPT). The receiving terminal 200 obtains, from the MP table, location information of the asset distributed through the protocol of MMTP/HTTP distribution. The location information in this case is a URL. "http:// ~.mmt" is specified as a schema. Furthermore, a parameter that specifies a packet identifier (packet_id) is added by a query field. The receiving terminal 200 can identify it as MMTP/HTTP distribution from "http" and "mmt."

The receiving terminal 200 transmits an HTTP request to the HTTP server. At this point in time, the receiving terminal 200 inserts the location information into an HTTP header. In this case, as the location information, "http:// ~.mmt" included in the location information acquired from the MP table is inserted. Furthermore, a parameter "pid=a" that specifies the packet identifier, and a parameter "msn=*" that specifies an MPU sequence number are added by a query field. The parameter "msn=*" is a specification to "send an MPU having an MPU sequence number at that timing."

The HTTP request is transmitted to a target HTTP server. The HTTP server transmits, to the receiving terminal 200, an MMTP stream including an MPU with an MPU sequence number (= 10) at the timing when the HTTP request was transmitted, as an HTTP response. In the receiving terminal 200, filtering is performed with the packet identifier (packet _id) included in the location information to obtain a target asset (component) from the MMTP stream.

The receiving terminal 200 transmits an HTTP request that requests an MPU with the next MPU sequence number (= 11) to the HTTP server before or after the completion of the receipt of the MMTP stream. The HTTP server then transmits, to the receiving terminal 200, an MMTP stream including the MPU with the next MPU sequence number (= 11) as an HTTP response. The receiving terminal 200 performs filtering with the packet identifier (packet _id) included in the location information and accordingly can obtain a target asset (component) from the MMTP stream.

Similarly, the receiving terminal 200 subsequently transmits, to the HTTP server, an HTTP request that requests an MPU with the next MPU sequence number, receives, from the HTTP server, an MMTP stream including the MPU with the next MPU sequence number as an HTTP response, and obtains a target asset (component) from the MMTP stream.

Incidentally, at the time of the HTTP request, the parameter "pid=a" included in the HTTP header specifies the type of the asset, for example, video or audio. Video and audio may be multiplexed into the MMTP stream. In this case, in terms of the MPU sequence number, video has a video MPU sequence number, and audio has an audio MPU sequence number. Even if an MPU sequence number is specified, which asset (component) the MPU sequence number belongs to is unknown without the parameter "pid=a."

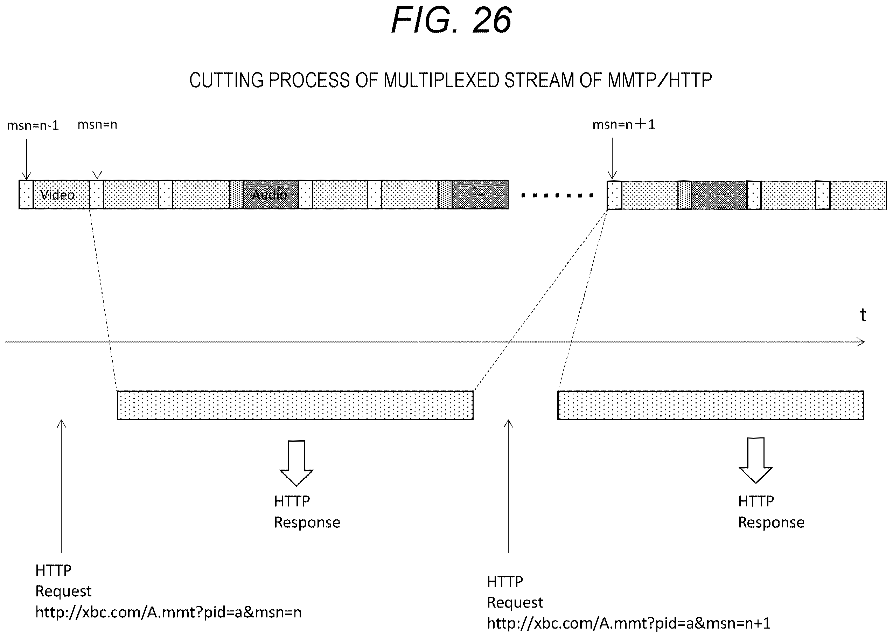

Fig. 26 illustrates a cutting process in a multiplexed stream of MMTP/HTTP. The parameter "pid=a" indicates video. The HTTP server, which has received an HTTP request that requests an MPU with an MPU sequence number n, cuts out from the switching of the video MPU sequence number from n - 1 to n to from n to n + 1, from the multiplexed stream, and transmits the cutting to the receiving terminal 200.

Incidentally, in this case, audio may also be desired to be obtained from the same multiplexed stream. In this case, the receiving terminal 200 can recognize, from the location information, that the audio and video are multiplexed. The receiving terminal 200 performs a process of retrieving target audio from the MMTP stream cut out with the video MPU sequence number by filtering with the packet identifier (packet_id) included in the location information.

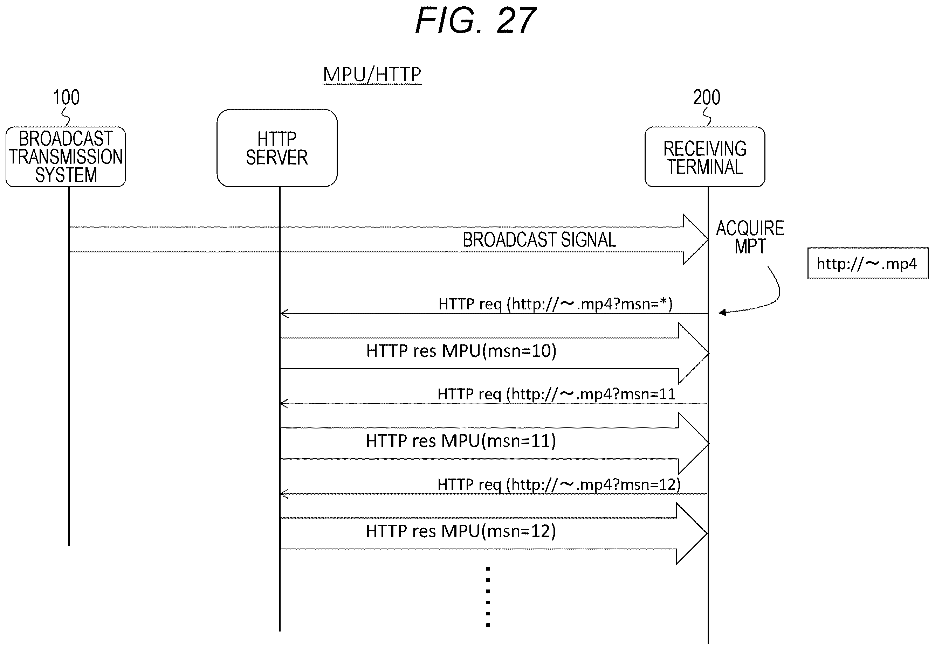

Next, a case of receiving an asset distributed through the protocol of (E) MPU/HTTP distribution is described with reference to Fig. 27. In the case of MPU/HTTP distribution, the protocol of the hyper text transfer protocol (HTTP) is used. In the case of MPU/HTTP distribution, an HTTP server is present.

The receiving terminal 200 receives a broadcast signal, and acquires an MP table (MPT). The receiving terminal 200 obtains, from the MP table, location information of the asset distributed through the protocol of MPU/HTTP distribution. The location information in this case is a URL. "http:// ~.mp4" is specified as a schema. The receiving terminal 200 can identify it as MPU/HTTP distribution from "http" and "mp4."

The receiving terminal 200 transmits an HTTP request to the HTTP server. At this point in time, the receiving terminal 200 inserts the location information into an HTTP header. In this case, as the location information, "http:// ~.mp4" included in the location information acquired from the MP table is inserted. Furthermore, the parameter "msn=*" that specifies an MPU sequence number is added by a query field. The parameter "msn=*" is a specification to "send an MPU at the timing."

The HTTP request is transmitted to a target HTTP server. The HTTP server transmits the MPU with the MPU sequence number (= 10) at the timing when the HTTP request was transmitted, as an HTTP response, to the receiving terminal 200.

The receiving terminal 200 transmits an HTTP request that requests the MPU with the next MPU sequence number (= 11) to the HTTP server before or after the completion of the receipt of the MPU. The HTTP server transmits the MPU with the next MPU sequence number (= 11) as an HTTP response to the receiving terminal 200.

Similarly, the receiving terminal 200 subsequently transmits, to the HTTP server, an HTTP request that requests an MPU with the next MPU sequence number, and receives, from the HTTP server, the MPU with the next MPU sequence number as an HTTP response.

### [Configuration of the Broadcast Transmission System]

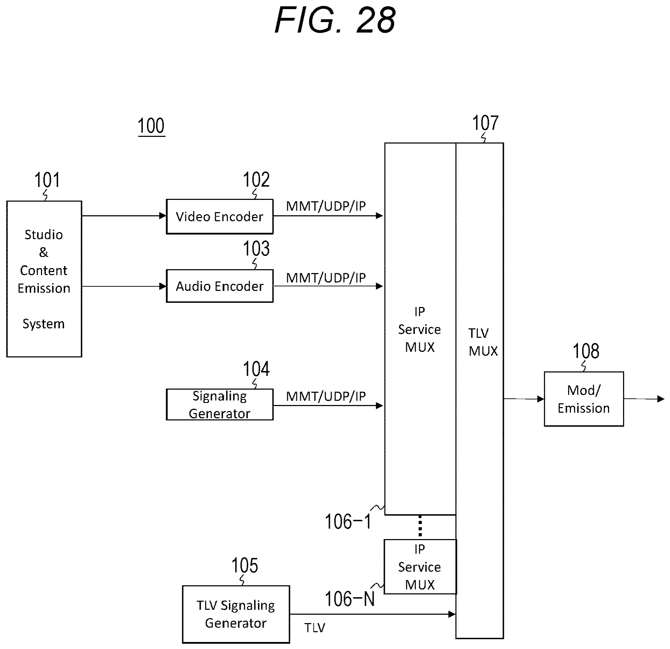

Fig. 28 illustrates a configuration example of the broadcast transmission system 100. The broadcast transmission system 100 includes a signal transmission unit 101, a video encoder 102, an audio encoder 103, and a signaling generator 104. Moreover, the broadcast transmission system 100 includes a TLV signaling generator 105, N IP service multiplexers 106-1 to 106-N, a TLV multiplexer 107, and a modulation/transmission unit 108.

The signal transmission unit 101 is, for example, a studio of a TV station, or a recording/reproducing apparatus such as a VTR, and transmits video and audio stream data to the encoders. The video encoder 102 encodes the video data transmitted from the signal transmission unit 101, further packetizes it, and transmits an IP packet including a video MMT packet to the IP service multiplexer 106-1. The audio encoder 103 encodes the audio data transmitted from the signal transmission unit 101, further packetizes it, and transmits an IP packet including an audio MMT packet to the IP service multiplexer 106-1.

The signaling generator 104 generates a signaling message and transmits an IP packet including an MMT packet where the signaling message is placed in the payload portion to the IP service multiplexer 106-1. In this case, the signaling generator 104 places an MP table (MPT) in a PA message (see Figs. 12 and 13). The MP table includes information on all assets (components) transmitted in broadcasting and communication as described above. The information also includes location information of each asset.

The IP service multiplexer 106-1 performs time-division multiplexing on an IP packet transmitted from each encoder. At this point in time, the IP service multiplexer 106-1 adds a TLV header to each IP packet to form a TLV packet. The IP service multiplexer 106-1 configures one channel portion within one transponder. The IP service multiplexers 106-2 to 106-N have a similar function to the IP service multiplexer 106-1, and configures other channel portions within the one transponder.

The TLV signaling generator 105 generates signaling (signaling) information and generates a TLV packet where the signaling (signaling) information is placed in the payload portion. The TLV multiplexer 107 multiplexes the TLV packets generated by the IP service multiplexers 106-1 to 106-N and the TLV signaling generator 105 to generate a broadcast stream. The modulation/transmission unit 108 performs an RF modulation process on the broadcast stream generated by the TLV multiplexer 107 to transmit it to an RF transmission path.

The operation of the broadcast transmission system 100 illustrated in Fig. 28 is briefly described. The video data transmitted from the signal transmission unit 101 is supplied to the video encoder 102. In the video encoder 102, the video data is encoded, and further packetized; accordingly, an IP packet including a video MMT packet is generated. The IP packet is transmitted to the IP service multiplexer 106-1. Moreover, a similar process is also performed on the audio data transmitted from the signal transmission unit 101. An IP packet including an audio MMT packet generated by the audio encoder 103 is then transmitted to the IP service multiplexer 106-1.

Moreover, in the signaling generator 104, a signaling message is generated. An IP packet including an MMT packet where the signaling message is placed in the payload portion is generated. The IP packet is transmitted to the IP service multiplexer 106-1. At this point in time, an MP table (MPT) is placed in a PA message.

In the IP service multiplexer 106-1, time-division multiplexing is performed on the IP packets transmitted from the encoders and the signaling generator 104. At this point in time, a TLV header is added to each IP packet to form a TLV packet. In the IP service multiplexer 106-1, one channel portion within one transponder is processed. In the IP service multiplexers 106-2 to 106-N, the other channel portions within the one transponder are similarly processed

The TLV packets obtained by the IP service multiplexers 106-1 to 106-N are transmitted to the TLV multiplexer 107. Furthermore, the TLV packet where the signaling (signaling) information is placed in the payload portion is also transmitted from the TLV signaling generator 105 to the TLV multiplexer 107.

In the TLV multiplexer 107, the TLV packets generated by the IP service multiplexers 106-1 to 106-N and the TLV signaling generator 105 are multiplexed to generate a broadcast stream. The broadcast stream is transmitted to the modulation/transmission unit 108. In the modulation/transmission unit 108, the RF modulation process is performed on the broadcast stream. The RF modulated signal is transmitted as a broadcast signal to the RF transmission path.

### [Configuration of the Receiving Terminal]

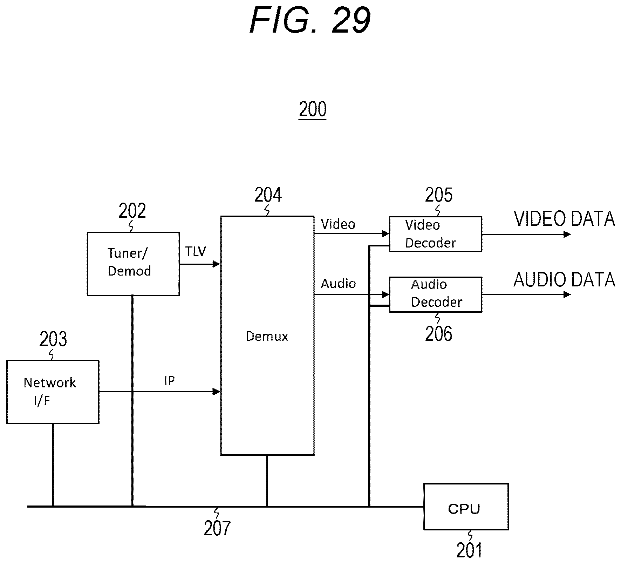

Fig. 29 illustrates a configuration example of the receiving terminal 200. The receiving terminal 200 includes a CPU 201, a tuner/demodulator 202, a network interface unit 203, and a demultiplexer 204. Moreover, the receiving terminal 200 includes a video decoder 205 and an audio decoder 206.

The CPU 201 configures a control unit, and controls the operation of each unit of the receiving terminal 200. The tuner/demodulator 202 receives the RF modulated signal, performs a demodulation process, and obtains the broadcast stream. The network interface unit 203 receives a transport stream of a service distributed from the distribution server 300 via the communication network 400.

The demultiplexer 204 performs a demultiplexing process and a depacketizing process on the broadcast stream obtained by the tuner/demodulator 202 and the transport stream obtained by the network interface unit 203 to output the signaling information, and the encoded video and audio data.

The video decoder 205 decodes the encoded video data obtained by the demultiplexer 204 to obtain baseband video data. The audio decoder 206 decodes the encoded audio data obtained by the demultiplexer 204 to obtain baseband audio data.

The operation of the receiving terminal 200 illustrated in Fig. 29 is briefly described. The tuner/demodulator 202 receives the RF modulated signal transmitted along the RF transmission path, performs a demodulation process, and obtains the broadcast stream. The broadcast stream is transmitted to the demultiplexer 204. Moreover, the network interface unit 203 receives the transport stream of the service distributed from the distribution server 300 via the communication network 400 and transmits the transport stream to the demultiplexer 204.

The demultiplexer 204 performs the demultiplexing process and the depacketizing process on the broadcast stream from the tuner/demodulator 202 and the transport stream from the network interface unit 203 to extract the signaling information, the encoded video and audio data, and the like.

Various types of signaling information extracted in the demultiplexer 204 are transmitted to the CPU 201 via a CPU bus 207. The signaling information includes TLV-SI and MMT-SI. As described above, TLV-SI is a transmission control signal (TLV-NIT/AMT) on the TLV transmission packet. MMT-SI is a signaling message as the signaling information included in the payload portion of the MMT packet (see Fig. 2). The CPU 201 controls the operation of each unit of the receiving terminal 200 on the basis of the signaling information.

The encoded video data extracted by the demultiplexer 204 is transmitted to the video decoder 205 for decoding to obtain baseband video data. Moreover, the encoded audio data extracted by the demultiplexer 204 is transmitted to the audio decoder 206 for decoding to obtain baseband audio data for audio output.

As described above, in the hybrid broadcasting and communication system 10 illustrated in Fig. 1, information on a plurality of distribution protocols, the information on each distribution protocol including at least location information and protocol identification information, or acquisition information for acquiring the information on the plurality of distribution protocols is inserted into an MP table, in relation to an asset (component) on a communication path. Hence, a receiving side can excellently receive the component through a distribution protocol in accordance with its own distribution network environment.

### <2. Modifications>

Incidentally, in the above-mentioned embodiment, the example where a transmission packet is an MMT packet is illustrated. The present technology is not limited to this. Also if other similar transmission packets are handled, the present technology can be naturally applied.

### REFERENCE SIGNS LIST

- 10: Hybrid broadcasting and communication system
- 100: Broadcast transmission system
- 101: Signal transmission unit
- 102: Video encoder
- 103: Audio encoder
- 104: Signaling generator
- 105: TLV signaling generator
- 106-1 to 106-N: IP service multiplexer
- 107: TLV multiplexer
- 108: Modulation/transmission unit
- 200: Receiving terminal
- 201: CPU
- 202: Tuner/demodulator
- 203: Network interface unit
- 204: Demultiplexer
- 205: Video decoder
- 206: Audio decoder
- 207: CPU bus
- 300: Distribution server
- 400: Communication network

## Claims

1. A transmission apparatus (100) comprising:
a transport stream generation unit (107) configured to generate a transport stream obtained by time-division multiplexing a plurality of transmission packets respectively including a component or information on the component;
a transmission unit (108) configured to transmit the transport stream along a broadcast transmission path; and
an information insertion unit configured to insert, into a table in a transmission packet including information on the component, information on a plurality of distribution protocols, the information on each distribution protocol including at least location information and protocol identification information, for acquiring a specific component to be acquired on a communication path in relation to the specific component.

2. The transmission apparatus (100) according to claim 1, wherein the transport stream includes at least a first transmission packet (102, 103) including the component and a second transmission packet (104) including the information on the component.

3. The transmission apparatus (100) according to any preceding claim, wherein the plurality of distribution protocols is two or more distribution protocols to be selected from protocols of multicast distribution, MMTP/UDP distribution, MMTP/TCP distribution, and MMTP/HTTP distribution, MMTP meaning MPEG Media Transport Protocol.

4. The transmission apparatus (100) according to claim 3,
wherein upon the protocol identification information indicating the MMTP/UDP distribution, the information on the distribution protocol includes a parameter that specifies UDP in addition to a URL, and/or upon the protocol identification information indicating the MMTP/TCP distribution, the information on the distribution protocol includes a parameter that specifies TCP in addition to a URL.

5. The transmission apparatus (100) according to claim 2 or any one of claims 3 to 4 when dependent on claim 2,
wherein information on a plurality of the specific components is placed in the second transmission packet, and
the information on one of the plurality of distribution protocols is inserted into the placed information on each of the plurality of the specific components.

6. The transmission apparatus (100) according to claim 2 or any one of claims 3 to 4 when dependent on claim 2,
wherein information on one specific component is placed in the second transmission packet, and
the information on the plurality of distribution protocols is inserted into the placed information on the one specific component.

7. The transmission apparatus (100) according to any preceding claim, wherein information on another component to be included in the transport stream with the specific component and distributed is added to the information on each of the plurality of distribution protocols.

8. The transmission apparatus (100) according to any preceding claim, wherein managed network information is added to information on the protocol of the multicast distribution among the information on the plurality of distribution protocols.

9. A transmission method comprising:
a transport stream generation step of generating a transport stream obtained by time-division multiplexing a plurality of transmission packets respectively including a component or information on the component;
a transmission step of a transmission unit (108) transmitting the transport stream along a broadcast transmission path; and
an information insertion step of inserting, into a table in a transmission packet including information on the component, information on a plurality of distribution protocols, the information on each distribution protocol including at least location information and protocol identification information, for acquiring a specific component to be acquired on a communication path in relation to the specific component.

10. A receiving apparatus (200) comprising:
a receiving unit (202) configured to receive, along a broadcast transmission path, a table in a transmission packet including information on a component of a transport stream obtained by time-division multiplexing a plurality of transmission packets respectively including a component or information on the component, wherein information is included in the table, the information including information on a plurality of distribution protocols, the information on each distribution protocol including at least location information and protocol identification information, for acquiring a specific component to be acquired on a communication path in relation to the specific component; and
a communication unit (204) configured to select one receivable distribution protocol from the information on the plurality of distribution protocols and receive another transport stream including at least the specific component via a network through the selected distribution protocol.

11. The receiving apparatus (200) according to claim 10,
wherein the transport stream received by the communication unit (204) includes at least a further transmission packet including the specific component, and
the communication unit (204) is further configured to extract the further transmission packet on the basis of packet identification information included in information on the distribution protocol.

12. The receiving apparatus (200) according to claim 11,
wherein the transport stream received by the receiving unit (202) includes at least a first transmission packet including the component and a second transmission packet including the information on the component,
information on a plurality of the specific components is placed in the second transmission packet, and
the information on one of the plurality of distribution protocols is inserted into the placed information on each of the plurality of the specific components.

13. The receiving apparatus (200) according to claim 11,
wherein the transport stream received by the receiving unit (202) includes at least a first transmission packet including the component and a second transmission packet including the information on the component,
information on one specific component is placed in the second transmission packet, and
the information on the plurality of distribution protocols is inserted into the placed information on the one specific component.

14. A receiving method comprising:
a receiving step of a receiving unit (202) receiving, along a broadcast transmission path, a table in a transmission packet including information on a component of a transport stream obtained by time-division multiplexing a plurality of transmission packets respectively including a component or information on the component, wherein information is included in the table, the information including information on a plurality of distribution protocols, the information on each distribution protocol including at least location information and protocol identification information, for acquiring a specific component to be acquired on a communication path in relation to the specific component; and
a communication step of selecting one receivable distribution protocol from the information on the plurality of distribution protocols and receiving another transport stream including at least the specific component via a network through the selected distribution protocol.

15. The receiving method according to claim 14,
wherein received the transport stream includes at least a further transmission packet including the specific component, and
the communication step is further configured to extract the further transmission packet on the basis of packet identification information included in information on the distribution protocol.

## Patentansprüche

1. Übertragungseinrichtung (100), umfassend:
eine Transportstrom-Erzeugungseinheit (107), die konfiguriert ist, um einen Transportstrom zu erzeugen, der durch Zeitmultiplexverfahren einer Vielzahl von Übertragungspaketen erhalten wird, die jeweils eine Komponente oder Informationen über die Komponente einschließen;
eine Übertragungseinheit (108), die konfiguriert ist, um den Transportstrom entlang eines Rundfunkübertragungspfads zu übertragen; und
eine Informationseinfügungseinheit, die konfiguriert ist, um in eine Tabelle in einem Übertragungspaket, das Informationen über die Komponente einschließt, Informationen über eine Vielzahl von Verteilungsprotokollen einzufügen, wobei die Informationen über jedes Verteilungsprotokoll mindestens Standortinformationen und Protokollidentifikationsinformationen einschließen, zum Erfassen einer spezifischen zu erfassenden Komponente auf einem Kommunikationspfad in Bezug auf die spezifische Komponente.

2. Übertragungseinrichtung (100) nach Anspruch 1, wobei der Transportstrom mindestens ein erstes Übertragungspaket (102, 103), das die Komponente einschließt, und ein zweites Übertragungspaket (104), das die Informationen über die Komponente einschließt, einschließt.

3. Übertragungseinrichtung (100) nach einem der vorstehenden Ansprüche, wobei die Vielzahl von Verteilungsprotokollen zwei oder mehr Verteilungsprotokolle sind, die aus Protokollen der Multicast-Verteilung, MMTP/UDP-Verteilung, MMTP/TCP-Verteilung und MMTP/HTTP-Verteilung ausgewählt werden sollen, wobei MMTP MPEG Media Transport Protocol bedeutet.

4. Übertragungseinrichtung (100) nach Anspruch 3,
wobei bei den Protokollidentifikationsinformationen, die die MMTP/UDP-Verteilung anzeigen, die Informationen über das Verteilungsprotokoll einen Parameter einschließen, der UDP zusätzlich zu einer URL spezifiziert, und/oder bei den Protokollidentifikationsinformationen, die die MMTP/TCP-Verteilung anzeigen, die Informationen über das Verteilungsprotokoll einen Parameter einschließen, der TCP zusätzlich zu einer URL spezifiziert.

5. Übertragungseinrichtung (100) nach Anspruch 2 oder einem der Ansprüche 3 bis 4, wenn abhängig von Anspruch 2,
wobei Informationen über eine Vielzahl der spezifischen Komponenten in dem zweiten Übertragungspaket platziert werden, und
die Informationen über eines der Vielzahl von Verteilungsprotokollen in die platzierten Informationen über jede der Vielzahl der spezifischen Komponenten eingefügt werden.

6. Übertragungseinrichtung (100) nach Anspruch 2 oder einem der Ansprüche 3 bis 4, wenn abhängig von Anspruch 2,
wobei Informationen zu einer spezifischen Komponente in das zweite Übertragungspaket eingefügt werden, und
die Informationen über die Vielzahl von Verteilungsprotokollen in die platzierten Informationen über die eine spezifische Komponente eingefügt werden.

7. Übertragungseinrichtung (100) nach einem der vorstehenden Ansprüche, wobei Informationen über eine andere Komponente, die in den Transportstrom mit der spezifischen Komponente eingeschlossen und verteilt werden soll, zu den Informationen über jedes der Vielzahl von Verteilungsprotokollen hinzugefügt werden.

8. Übertragungseinrichtung (100) nach einem der vorstehenden Ansprüche, wobei verwaltete Netzwerkinformationen zu Informationen über das Protokoll der Multicast-Verteilung unter den Informationen über die Vielzahl von Verteilungsprotokollen hinzugefügt werden.

9. Übertragungsverfahren, umfassend:
einen Transportstrom-Erzeugungsschritt zum Erzeugen eines Transportstroms, der durch Zeitmultiplexverfahren einer Vielzahl von Übertragungspaketen erhalten wird, die jeweils eine Komponente oder Informationen über die Komponente einschließen;
einen Übertragungsschritt einer Übertragungseinheit (108), die den Transportstrom entlang eines Rundfunkübertragungspfads überträgt; und
einen Informationseinfügungsschritt zum Einfügen von Informationen über eine Vielzahl von Verteilungsprotokollen in eine Tabelle in einem Übertragungspaket, das Informationen über die Komponente einschließt, wobei die Informationen über jedes Verteilungsprotokoll mindestens Standortinformationen und Protokollidentifikationsinformationen einschließen, zum Erfassen einer spezifischen zu erfassenden Komponente auf einem Kommunikationspfad in Bezug auf die spezifische Komponente.

10. Empfangsvorrichtung (200), umfassend:
eine Empfangseinheit (202), die konfiguriert ist, um entlang eines Rundfunkübertragungspfads eine Tabelle in einem Übertragungspaket zu empfangen, das Informationen über eine Komponente eines Transportstroms einschließt, der durch Zeitmultiplexverfahren einer Vielzahl von Übertragungspaketen erhalten wird, die jeweils eine Komponente oder Informationen über die Komponente einschließen, wobei Informationen in der Tabelle eingeschlossen sind, wobei die Informationen Informationen über eine Vielzahl von Verteilungsprotokollen einschließen, wobei die Informationen über jedes Verteilungsprotokoll mindestens Standortinformationen und Protokollidentifikationsinformationen zum Erfassen einer spezifischen Komponente, die auf einem Kommunikationspfad in Bezug auf die spezifische Komponente zu erfassen ist, einschließen; und
eine Kommunikationseinheit (204), die konfiguriert ist, um ein empfangbares Verteilungsprotokoll aus den Informationen über die Vielzahl von Verteilungsprotokollen auszuwählen und einen anderen Transportstrom, der mindestens die spezifische Komponente einschließt, über ein Netzwerk durch das ausgewählte Verteilungsprotokoll zu empfangen.

11. Empfangseinrichtung (200) nach Anspruch 10,
wobei der von der Kommunikationseinheit (204) empfangene Transportstrom mindestens ein weiteres Übertragungspaket einschließt, das die spezifische Komponente einschließt, und
die Kommunikationseinheit (204) ferner konfiguriert ist, um das weitere Übertragungspaket auf der Basis von Paketidentifikationsinformationen zu extrahieren, die in Informationen über das Verteilungsprotokoll eingeschlossen sind.

12. Empfangseinrichtung (200) nach Anspruch 11,
wobei der von der Empfangseinheit (202) empfangene Transportstrom mindestens ein erstes Übertragungspaket, das die Komponente einschließt, und ein zweites Übertragungspaket, das die Informationen über die Komponente einschließt, einschließt,
Informationen über eine Vielzahl der spezifischen Komponenten in dem zweiten Übertragungspaket platziert werden, und
die Informationen über eines der Vielzahl von Verteilungsprotokollen in die platzierten Informationen über jede der Vielzahl der spezifischen Komponenten eingefügt werden.

13. Empfangseinrichtung (200) nach Anspruch 11,
wobei der von der Empfangseinheit (202) empfangene Transportstrom mindestens ein erstes Übertragungspaket, das die Komponente einschließt, und ein zweites Übertragungspaket, das die Informationen über die Komponente einschließt, einschließt,
Informationen zu einer spezifischen Komponente in das zweite Übertragungspaket eingefügt werden, und
die Informationen über die Vielzahl von Verteilungsprotokollen in die platzierten Informationen über die eine spezifische Komponente eingefügt werden.

14. Empfangsverfahren, umfassend:
einen Empfangsschritt einer Empfangseinheit (202), die entlang eines Rundfunkübertragungspfads eine Tabelle in einem Übertragungspaket empfängt, das Informationen über eine Komponente eines Transportstroms einschließt, der durch Zeitmultiplexverfahren einer Vielzahl von Übertragungspaketen erhalten wird, die jeweils eine Komponente oder Informationen über die Komponente einschließen, wobei Informationen in der Tabelle eingeschlossen sind, wobei die Informationen Informationen über eine Vielzahl von Verteilungsprotokollen einschließen, wobei die Informationen über jedes Verteilungsprotokoll mindestens Standortinformationen und Protokollidentifikationsinformationen zum Erfassen einer spezifischen Komponente, die auf einem Kommunikationspfad in Bezug auf die spezifische Komponente zu erfassen ist, einschließen; und
einen Kommunikationsschritt des Auswählens eines empfangbaren Verteilungsprotokolls aus den Informationen über die Vielzahl von Verteilungsprotokollen und des Empfangens eines anderen Transportstroms, der mindestens die spezifische Komponente einschließt, über ein Netzwerk durch das ausgewählte Verteilungsprotokoll.

15. Empfangsverfahren nach Anspruch 14,
wobei der empfangene Transportstrom mindestens ein weiteres Übertragungspaket einschließt, das die spezifische Komponente einschließt, und
der Kommunikationsschritt ferner konfiguriert ist, um das weitere Übertragungspaket auf der Basis von Paketidentifikationsinformationen zu extrahieren, die in Informationen über das Verteilungsprotokoll eingeschlossen sind.

## Revendications

1. Appareil de transmission (100) comprenant :
une unité de génération de flux de transport (107) configurée pour générer un flux de transport obtenu par multiplexage par répartition dans le temps d'une pluralité de paquets de transmission comportant respectivement un composant ou des informations concernant le composant ;
une unité de transmission (108) configurée pour transmettre le flux de transport le long d'une voie de transmission par diffusion ; et
une unité d'insertion d'informations configurée pour insérer, dans une table dans un paquet de transmission comportant des informations concernant le composant, des informations concernant une pluralité de protocoles de distribution, les informations concernant chaque protocole de distribution comportant au moins des informations d'emplacement et des informations d'identification de protocole, permettant d'acquérir un composant spécifique à acquérir sur une voie de communication en relation avec le composant spécifique.

2. Appareil de transmission (100) selon la revendication 1, dans lequel le flux de transport comporte au moins un premier paquet de transmission (102, 103) comportant le composant et un second paquet de transmission (104) comportant les informations concernant le composant.

3. Appareil de transmission (100) selon l'une quelconque revendication précédente, dans lequel la pluralité de protocoles de distribution est de deux protocoles de distribution ou plus à sélectionner parmi des protocoles de distribution par multidiffusion, de distribution MMTP/UDP, de distribution MMTP/TCP, et de distribution MMTP/HTTP, MMTP signifiant Protocole de transport de médias MPEG.

4. Appareil de transmission (100) selon la revendication 3,
dans lequel, lorsque les informations d'identification de protocole indiquent la distribution MMTP/UDP, les informations concernant le protocole de distribution comportent un paramètre qui spécifie UDP en plus d'une URL, et/ou lorsque les informations d'identification de protocole indiquent la distribution MMTP/TCP, les informations concernant le protocole de distribution comportent un paramètre qui spécifie TCP en plus d'une URL.

5. Appareil de transmission (100) selon la revendication 2 ou l'une quelconque des revendications 3 à 4 lorsqu'elles dépendent de la revendication 2,
dans lequel des informations concernant une pluralité des composants spécifiques sont placées dans le second paquet de transmission, et
les informations concernant l'un de la pluralité de protocoles de distribution sont insérées dans les informations placées concernant chacun de la pluralité des composants spécifiques.

6. Appareil de transmission (100) selon la revendication 2 ou l'une quelconque des revendications 3 à 4 lorsqu'elles dépendent de la revendication 2,
dans lequel des informations concernant un composant spécifique sont placées dans le second paquet de transmission, et
les informations concernant la pluralité de protocoles de distribution sont insérées dans les informations placées concernant ledit composant spécifique.

7. Appareil de transmission (100) selon l'une quelconque revendication précédente, dans lequel des informations concernant un autre composant à inclure dans le flux de transport avec le composant spécifique et à distribuer sont ajoutées aux informations concernant chacun de la pluralité de protocoles de distribution.

8. Appareil de transmission (100) selon l'une quelconque revendication précédente, dans lequel des informations de réseau géré sont ajoutées à des informations concernant le protocole de la distribution par multidiffusion parmi les informations concernant la pluralité de protocoles de distribution.

9. Procédé de transmission comprenant :
une étape de génération de flux de transport consistant à générer un flux de transport obtenu par multiplexage par répartition dans le temps d'une pluralité de paquets de transmission comportant respectivement un composant ou des informations concernant le composant ;
une étape de transmission d'une unité de transmission (108) transmettant le flux de transport le long d'une voie de transmission par diffusion ; et
une étape d'insertion d'informations consistant à insérer, dans une table dans un paquet de transmission comportant des informations concernant le composant, des informations concernant une pluralité de protocoles de distribution, les informations concernant chaque protocole de distribution comportant au moins des informations d'emplacement et des informations d'identification de protocole, permettant d'acquérir un composant spécifique à acquérir sur une voie de communication en relation avec le composant spécifique.

10. Appareil de réception (200) comprenant :
une unité de réception (202) configurée pour recevoir, le long d'une voie de transmission de diffusion, une table dans un paquet de transmission comportant des informations concernant un composant d'un flux de transport obtenu par multiplexage par répartition dans le temps d'une pluralité de paquets de transmission comportant respectivement un composant ou des informations concernant le composant, dans lequel des informations sont incluses dans la table, les informations comportant des informations concernant une pluralité de protocoles de distribution, les informations concernant chaque protocole de distribution comportant au moins des informations d'emplacement et des informations d'identification de protocole, permettant d'acquérir un composant spécifique à acquérir sur une voie de communication en relation avec le composant spécifique ; et
une unité de communication (204) configurée pour sélectionner un protocole de distribution recevable parmi les informations concernant la pluralité de protocoles de distribution et recevoir un autre flux de transport comportant au moins le composant spécifique par l'intermédiaire d'un réseau par le protocole de distribution sélectionné.

11. Appareil de réception (200) selon la revendication 10,
dans lequel le flux de transport reçu par l'unité de communication (204) comporte au moins un autre paquet de transmission comportant le composant spécifique, et
l'unité de communication (204) est en outre configurée pour extraire l'autre paquet de transmission sur la base d'informations d'identification de paquet incluses dans des informations concernant le protocole de distribution.

12. Appareil de réception (200) selon la revendication 11,
dans lequel le flux de transport reçu par l'unité de réception (202) comporte au moins un premier paquet de transmission comportant le composant et un second paquet de transmission comportant les informations concernant le composant,
des informations concernant une pluralité des composants spécifiques sont placées dans le second paquet de transmission, et
les informations concernant l'un de la pluralité de protocoles de distribution sont insérées dans les informations placées concernant chacun de la pluralité des composants spécifiques.

13. Appareil de réception (200) selon la revendication 11,
dans lequel le flux de transport reçu par l'unité de réception (202) comporte au moins un premier paquet de transmission comportant le composant et un second paquet de transmission comportant les informations concernant le composant,
des informations concernant un composant spécifique sont placées dans le second paquet de transmission, et
les informations concernant la pluralité de protocoles de distribution sont insérées dans les informations placées concernant ledit composant spécifique.

14. Procédé de réception comprenant :
une étape de réception consistant à recevoir, par une unité de réception (202), le long d'une voie de transmission de diffusion, une table dans un paquet de transmission comportant des informations concernant un composant d'un flux de transport obtenu par multiplexage par répartition dans le temps d'une pluralité de paquets de transmission comportant respectivement un composant ou des informations concernant le composant, dans lequel des informations sont incluses dans la table, les informations comportant des informations concernant une pluralité de protocoles de distribution, les informations concernant chaque protocole de distribution comportant au moins des informations d'emplacement et des informations d'identification de protocole, permettant d'acquérir un composant spécifique à acquérir sur une voie de communication en relation avec le composant spécifique ; et
une étape de communication consistant à sélectionner un protocole de distribution recevable parmi les informations concernant la pluralité de protocoles de distribution et à recevoir un autre flux de transport comportant au moins le composant spécifique par l'intermédiaire d'un réseau par le protocole de distribution sélectionné.

15. Procédé de réception selon la revendication 14,
dans lequel le flux de transport reçu comporte au moins un autre paquet de transmission comportant le composant spécifique, et
l'étape de communication est en outre configurée pour extraire l'autre paquet de transmission sur la base d'informations d'identification de paquet incluses dans des informations concernant le protocole de distribution.
